(19) Europäisches Patentamt
European Patent Office
Office européen des brevets

(11) Veröffentlichungsnummer: **0 008 811**
**B1**

(12) **EUROPÄISCHE PATENTSCHRIFT**

(45) Veröffentlichungstag der Patentschrift: **23.09.81**

(21) Anmeldenummer: **79200305.5**

(22) Anmeldetag: **14.06.79**

(51) Int. Cl.³: **C 09 D 3/49,** C 08 L 79/04, C 08 L 71/00, C 08 L 75/00, C 09 D 5/25, H 01 B 3/30

(54) **Thermohärtbarer Schmelzklebelack, dessen Herstellung und dessen Verwendung.**

(30) Priorität: **21.06.78 CH 6765/78**

(43) Veröffentlichungstag der Anmeldung: **19.03.80 Patentblatt 80/6**

(45) Bekanntmachung des Hinweises auf die Patenterteilung: **23.09.81 Patentblatt 81/38**

(84) Benannte Vertragsstaaten: **BE DE FR GB IT LU NL SE**

(56) Entgegenhaltungen: **GB-A-1 106 915**

(73) Patentinhaber: **Schweizerische Isola-Werke, CH-4226 Breitenbach (CH)**

(72) Erfinder: **Heim, Peter, Dr., Achilles-Bischoff-Strasse 6, CH-4053 Basel (CH)**
Erfinder: **Borer, Karl, Hofacker 138, CH-4249 Grindel (CH)**
Erfinder: **Allemann, Werner, Archweg 21, CH-4226 Breitenbach (CH)**

(74) Vertreter: **Braun, André et al, A. Braun, Braun, Héritier, Eschmann AG Patentanwälte Holbeinstrasse 36-38, CH-4051 Basel (CH)**

**EP 0 008 811 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Thermohärtbarer Schmelzklebelack, dessen Herstellung und dessen Verwendung

Die Erfindung betrifft einen thermohärtbaren Schmelzklebelack. Derartige Produkte werden auch als »Backlack« bezeichnet und stellen eine Lösung eines thermohärtbaren Schmelzklebers dar; nach Entfernen des Lösungsmittels kann dieser Schmelzkleber durch den sogenannten Backprozeß, d. h. durch Wärmezufuhr, zunächst zum Verkleben und dann zum Aushärten gebracht werden. Der erfindungsgemäße Schmelzklebelack besteht im wesentlichen aus einer Lösung einer thermohärtbaren Mischung bestimmter Polyhydantoinharze, Polyhydroxypolyätherharze (die auch als Phenoxyharze bezeichnet werden) und Polyurethanharze in einem bestimmten Gewichtsverhältnis und eignet sich besonders als Überzug für hochwärmebeständige lackisolierte Wicklungsdrähte.

So können beispielsweise aus mit dem erfindungsgemäßen Schmelzklebelack überzogenen wärmebeständigen lackisolierten Drähten hergestellte Wicklungen zu mechanisch und thermisch hoch beanspruchbaren elektromagnetischen Spulen verbacken werden, da der Überzug bei genügender Wärmezufuhr schmilzt, durch gleichzeitige Druckeinwirkung, entweder durch den beim Wickeln ausgeübten Zug oder durch Verbacken in einer Schablone oder einem Preßwerkzeug, in die Hohlräume zwischen den Drähten der Wicklung verdrängt wird und bei weiterer Wärmezufuhr durch chemische Vernetzung aushärtet.

Lackisolierte Wicklungsdrähte mit einem Schmelzkleberüberzug, die auch als »Backlackdrähte« bezeichnet werden, sind seit vielen Jahren im Handel. Es handelt sich dabei um elektrisch leitende Drähte, die mit einer unteren, normalen Isolierschicht aus einem üblichen Drahtlack und einer oberen Schicht aus einem Schmelzklebe- bzw. Backlack versehen sind. Die untere Schicht (die auch als Grund- oder Basisisolation oder Grundlack bezeichnet wird) stellt die eigentliche Isolation dar und muß aus einem Material bestehen, das u. a. durch die Verbackungsbedingungen der Schmelzkleberschicht nicht ungünstig beeinflußt wird. Die obere Schicht dient zur Verklebung der einzelnen Drahtwindungen einer Wicklung miteinander, so daß die verschiedensten Spulen für elektromagnetische Zwecke hergestellt werden können, ohne daß die Wicklungen, abgesehen von Sonderfällen, zusätzlich mit einem Tränklack verfestigt werden müssen. Solche Spulen können unter sehr verschiedenen Bedingungen, die der Größe und der Form der Spulen angepaßt sind, verbacken werden, z. B. durch Erwärmen in einem Wärmeschrank, durch Heißluftzufuhr beim Wickeln oder durch einen Stromstoß nach dem Wickeln.

Die bisher als Schmelzkleber (die auch als Bindemittel oder Klebeschicht bezeichnet werden) für das Überziehen von lackisolierten Drähten bekanntgewordenen Materialien können nach ihrem Verhalten in der Wärme in zwei Gruppen unterteilt werden:

A. Bei normaler Temperatur zähelastische Thermoplaste (die neuerdings auch als »Plastomere« bezeichnet werden), die sich ohne chemische Veränderung beliebig oft reversibel bis zum plastischen Zustand erwärmen lassen.
B. Bei normaler Temperatur zähelastische thermohärtbare Mischungen von Thermoplasten (Plastomeren), die schon beim einmaligen Erwärmen über den plastischen Zustand hinaus durch chemische Vernetzung (d. h. Härtung) in sogenannte Duromere übergehen.

Die Schmelzkleber aus der Gruppe A, die thermoplastische Kunstharze, wie Polyvinylbutyral, Polyamide, Polyester usw., enthalten, bewähren sich ausgezeichnet, sofern die Betriebstemperatur der unter ihrer Verwendung hergestellten, nur schmelzverklebten Drahtwicklung unterhalb des Erweichungsbereiches des Schmelzklebers liegt. Im Erweichungsbereich, d. h. im plastischen Zustand, nimmt jedoch die Klebekraft des Schmelzklebers stark ab. Infolgedessen kann sich die Wicklung deformieren und schließlich auseinanderfallen. Bei der Gruppe A hängt also die Betriebstemperatur u. a. von dem plastischen Verhalten des Schmelzklebers ab. Von dem plastischen Verhalten hängt aber auch die erforderliche Verbackungstemperatur ab, die deshalb nicht beliebig hoch gewählt werden kann. Für die thermoplastisch bleibenden Schmelzkleber der Gruppe A ist also der Einsatzbereich immer nach höheren Temperaturen hin begrenzt. Trotzdem haben diese Schmelzkleber eine gewisse Bedeutung, da es viele Anwendungsbereiche gibt, in denen keine hohen thermischen Beanspruchungen vorkommen und daher keine Überlastungen auftreten können.

Die Schmelzkleber aus der Gruppe B haben in den letzten Jahren besonderes Interesse gefunden, weil erkannt wurde, daß sich nur mit unter Verwendung derartiger thermohärtbarer Schmelzkleber hergestellten Backlackdrähten nach dem Verbackverfahren Wicklungen fertigen lassen, die auch bei höheren mechanischen und thermischen Beanspruchungen formstabil bleiben. Dadurch werden den Backlackdrähten ganz neue Anwendungsgebiete erschlossen, besonders im Bereich, der bisher den mit Tränklack getränkten Wicklungen vorbehalten war, insbesondere bei Wicklungen für elektrische Motoren.

Der stetige Trend nach höheren Anforderungen an die Wärmebeständigkeit von Wicklungen hat diese Entwicklung zusätzlich begünstigt, denn es sind heute Grundlacke für die Lackisolation von elektrisch leitenden Drähten bekannt, die Betriebstemperaturen von über 200°C zulassen. Diese Grundisolationen können besonders vorteilhaft mit thermohärtenden Schmelzklebelacken (Backlakken) mit entspechender Dauerwärmebeständigkeit beschichtet werden, um Backlackdrähte für die Herstellung von durch Verbacken verfestigbaren Wicklungen zu erzeugen. Auch das zunehmende Interesse für den Umweltschutz begünstigt die Anwendung solcher Schmelzklebelacke, da bei der Verfestigung einer Wicklung mit Tränklacken im Gegensatz zur Verfestigung durch Verbacken immer größere Mengen mehr oder weniger giftiger Lösungsmittel oder reaktiver Verdünner verdunsten oder verdampfen.

Für thermohärtbare Schmelzklebelacke wurde bisher die Verwendung folgender thermohärtbarer Harzmischungen aus der Gruppe B vorgeschlagen:
Mischungen von Epoxiden mit Isocyanaten (GB-PS Nr. 1.285.463),
Mischungen von Epoxiden mit Melamin- oder Phenolharzen (CH-PS Nr. 505.446),
Mischungen von Polyäthern mit Copolyamiden und Isocyanaten (GB-PS Nr. 1.424.743) und
Mischungen von Polyesterimidurethanen mit Phenoxyharzen (DE-OS Nr. 24.43.252).

Von diesen Vorschlägen hat der letzte insgesamt den größten technischen Fortschritt erbracht. Mit dem in der DE-OS beschriebenen Schmelzklebelack können problemlos Überzüge auf vorzugsweise wärmebeständige lackisolierte Drähte der Wärmeklasse F (155° C) bis H (180° C) aufgebracht werden; die Überzüge sind wie die Grundisolation gut lagerstabil, so daß die Backlackdrähte sich bei der Lagerung nicht verändern und gut wickelbar und verbackbar bleiben [die obigen Wärmeklassen sind in der Publikation 85 (1957) des Bureau Central de la Commission Electrotechnique Internationale (1, rue de Varembé, Genève; im folgenden abgekürzt CEI) definiert]. Die Praxis hat auch gezeigt, daß sich mit den Schmelzklebelacken der obengenannten DE-OS, wie dort angegeben, Feldspulen für elektrische Motoren der Wärmeklasse F bis H herstellen lassen, die sich im Betrieb mindestens so gut verhalten wie entsprechende Feldspulen, die mit Tränklacken der Wärmeklasse F bis H verfestigt sind.

Für mechanisch und/oder thermisch noch stärker beanspruchte Spulen (z. B. Rotorwicklungen für Elektromotoren der Wärmeklasse F bis H und darüber, Feld- und Rotorspulen für Handwerkzeugmaschinen, freitragende Spulen und thermisch bei über 250° C kurze Zeit überlastete Spulen) eignet sich jedoch auch der Schmelzklebelack der DE-OS Nr. 24.43.252 nicht, weil entweder die Formstabilität bei erhöhten Temperaturen oder das Dauerwärmebeständigkeitsverhalten allgemein oder aber die thermische Überlastungsfestigkeit (Schmorfestigkeit) der Spulen nicht mehr genügen.

Andererseits hat sich auch gezeigt, daß besonders bei kleinen Spulen möglichst kurze Verbackungszeiten erwünscht sind, damit die Spulen möglichst kostensparend fabriziert werden können. Es dürfte jedoch äußerst problematisch sein, einen Schmelzklebelack zu verwenden, der beispielsweise bei 180° C oder noch niedrigeren Temperaturen innerhalb von wenigen Minuten durch Verbacken thermisch gehärtet werden kann, da solche Schmelzklebelacke schon beim Austreiben des Lösungsmittels nach dem Beschichten der lackisolierten Drähte zumindest teilweise aushärten würden, so daß ein nachträgliches Verfestigen der aus den fertigen Backlackdrähten hergestellten Wicklung durch Verbacken nicht mehr einwandfrei erfolgen könnte.

Kürzere Verbackungszeiten lassen sich deshalb viel einfacher bei Verbackungstemperaturen oberhalb 200° C realisieren. In diesem Fall muß die Härtung allerdings wesentlich schneller erfolgen als bei den bekannten Schmelzklebern. Außerdem müssen auch der Grundlack für die Grundisolation und der Schmelzklebelack (d. h. das sogenannte Backlackdrahtsystem) gut aufeinander abgestimmt sein, damit der Backlackdraht bei den angegebenen hohen Verbackungstemperaturen keinen Schaden nimmt. Es dürfen u. a. keine Wärmeschockrisse entstehen, und die Grundisolation darf nicht erweichen; der Schmelzkleber muß jedoch schnell schmelzen und danach deutlich schneller und stärker vernetzen als die bis jetzt bekannten thermohärtbaren Schmelzkleber.

Bei der Fertigung größerer Spulen läßt sich jedoch eine schnelle Verbackung nicht leicht ausführen, weil ein schnelles Erhitzen und Abkühlen von großen Spulenmassen sehr schwierig ist und u. a. zu größeren mechanischen Spannungen innerhalb der Spulen führt. Hingegen läßt sich die Fertigung von größeren Spulen bei milderen Verbackungsbedingungen, z. B. durch mehrstündige Lagerung der Spulen bei Temperaturen unterhalb 200° C, vorzugsweise bei maximal 180° C, in einem Wärmeschrank, völlig problemlos durchführen und ergibt Spulen mit sehr guten und optimal ausgeglichenen Eigenschaften.

Im Hinblick auf die verschiedenen Verbackungsverfahren läßt sich ein thermohärtbarer Schmelzklebelack nur dann ziemlich universal zum Überziehen von lackisolierten Drähten verwenden, wenn der Schmelzkleber einerseits bereits ab ca. 180° C schmelzverklebbar, aber im Verhältnis dazu langsamer härtbar ist, jedoch andererseits bei Temperaturen oberhalb 200° C, vorzugsweise bei höchstens 220° C, möglichst schnell durch Verbacken thermisch gehärtet werden kann. Schmelzkleber, die bei höheren Temperaturen als 220° C verbacken werden müssen, sind auch für kleinere Spulen ungeeignet.

Diese Eigenschaften sind auch für eine weitere Verarbeitungstechnologie vorteilhaft, und zwar für die Herstellung von kompliziert geformten Spulen, die in mehreren Schritten umgeformt werden, wobei die plastische Verformbarkeit des Schmelzklebers ausgenützt wird. Sofern nämlich die thermohärtbaren Backlackdrähte nur schmelzverklebt werden, was unterhalb 200° C möglich ist, d. h., wenn der Schmelzkleber noch plastisch verformbar ist, können die thermohärtbaren Backlackdrähte wie die bisher verwendeten, thermoplastisch bleibenden Backlackdrähte wiederholt plastisch umgeformt werden. Bei der endgültigen Formgebung können die thermohärtbaren Backlackdrähte

dann aber im Gegensatz zu den thermoplastisch bleibenden Backlackdrähten thermisch ausgehärtet werden.

Ziel der Erfindung ist es demnach, einen thermohärtbaren Schmelzklebelack zu entwickeln, dessen den Schmelzkleber bildende Harzkomponenten vorzugsweise schon bei Temperaturen ab 180°C, maximal jedoch bei 220°C, einwandfrei durch Verbacken härtbar sind, bei Temperaturen oberhalb 200°C deutlich schneller und stärker vernetzen als die bisher bekannten thermohärtbaren Schmelzkleber und nach der Härtung (Vernetzung) bei erhöhten Temperaturen formstabiler, wesentlich wärmebeständiger und thermisch überlastbarer (schmorfester) sind als die bekannten thermohärtbaren Schmelzkleber, wobei natürlich die grundsätzlichen Anforderungen an Lagerstabilität, Verarbeitbarkeit usw. ebenfalls erfüllt sein müssen. Dieser Schmelzklebelack wird vorzugsweise für die Beschichtung von bereits bekannten wärmebeständigen lackisolierten Drähten zwecks Herstellung von thermohärtenden Backlackdrähten verwendet.

Es wurde nun überraschenderweise gefunden, daß durch Verwendung eines Schmelzklebelacks auf der Basis einer thermohärtbaren Mischung von Lösungen eines Polyhydantoinharzes, eines Polyhydroxypolyätherharzes (Phenoxyharzes) und eines Polyurethanharzes auf wärmebeständigen lackisolierten Wicklungsdrähten thermohärtbare Schmelzkleberschichten hergestellt werden können, die allen weiter oben aufgezählten Anforderungen wesentlich besser genügen als alle bisher bekannten Schmelzkleber.

Der erfindungsgemäße thermohärtbare Schmelzklebelack ist dadurch gekennzeichnet, daß er eine Lösung einer thermohärtbaren Mischung, die aus, bezogen auf die Harzfeststoffe,

(a) 20 bis 80 Gew.-% Polyhydantoinharz von linearer und/oder verzweigter Struktur, das der Formel

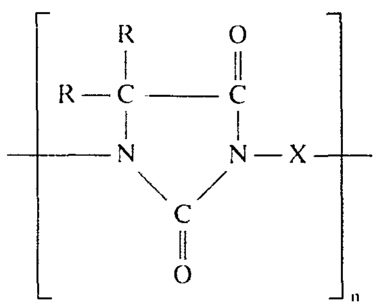

worin die Symbole R gleiche oder verschiedene Bedeutung haben und jeweils Wasserstoff oder einen Alkylrest mit 1 bis 4 C-Atomen bedeuten, die Symbole X gleiche oder verschiedene Bedeutung haben und jeweils ein aliphatisches, cycloaliphatisches, heterocyclisches und/oder aromatisches Bindeglied darstellen und n eine positive Zahl mit einem der spezifischen Viskosität entsprechenden Wert ist, entspricht und dessen 1%ige Lösung in Kresol DAB V bei 20°C eine spezifische Viskosität zwischen 0,2 und 1,5 hat,

(b) 5 bis 65 Gew.-% Polyhydroxypolyäther- bzw. Phenoxyharz von linearer und/oder verzweigter Struktur, das der Formel

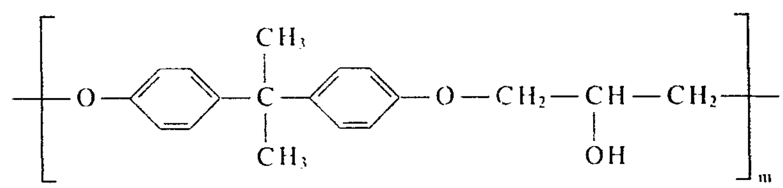

oder

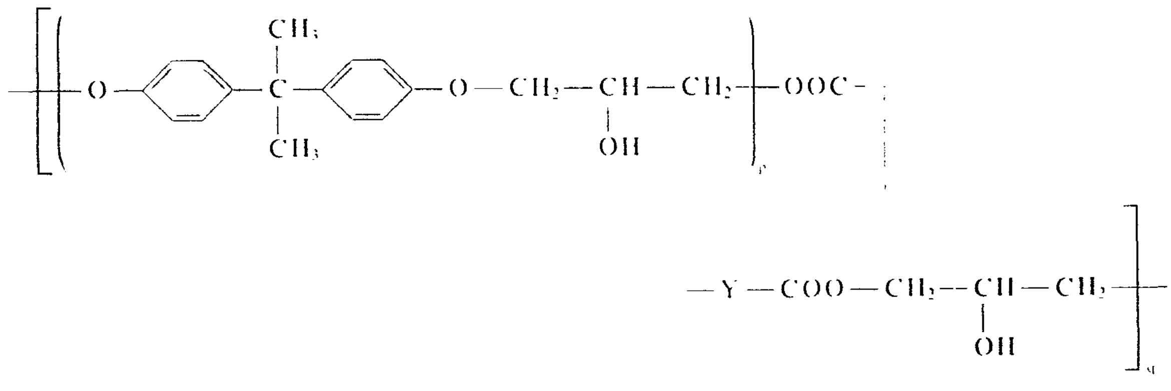

worin Y einen zweiwertigen aliphatischen, cycloaliphatischen, heterocyclischen und/oder aromatischen Rest bedeutet, m eine positive Zahl mit einem der spezifischen Viskosität entsprechenden Wert ist, p eine positive Zahl mit einem durchschnittlichen Wert von 1 bis 30 ist und q eine positive Zahl mit einem der spezifischen Viskosität entsprechenden Wert ist, entspricht und dessen 1%ige Lösung in Kresol DAB V bei 20° C eine spezifische Viskosität zwischen 0,2 und 1,5 hat, und

(c) 3 bis 40 Gew.-% Polyurethanharz von linearer und/oder verzweigter Struktur, das zu mindestens 4 Gew.-% aus der Urethangruppierung der Formel

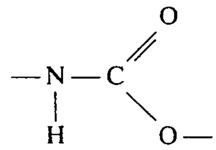

besteht und dessen 1%ige Lösung in Kresol DAB V bei 20° C eine spezifische Viskosität zwischen 0,1 und 1,0 hat,

besteht, in einem Lösungsmittel oder Lösungsmittelgemisch, das bei einer Temperatur im Bereich von 50 bis 230° C, vorzugsweise 130 bis 210° C, siedet, enthält.

Fig. 1 der Zeichnung stellt das ternäre System der Komponenten a, b und c in Dreieckskoordinaten dar. Die Zusammensetzung der erfindungsgemäßen Schmelzklebelacke kann dem schraffierten Bereich in Fig. 1 entnommen werden. Fig. 2 zeigt eine Versuchsanordnung zur Ermittlung der Verbackbarkeit und Fig. 3 eine Versuchsanordnung zur Ermittlung der Verbackungsfestigkeit von Schmelzklebelacken.

Die erfindungsgemäßen Schmelzklebelacke können hergestellt werden, indem man eine Lösung der Komponente (a) in einem Lösungsmittel oder Lösungsmittelgemisch, vorzugsweise einem phenolischen Lösungsmittel oder Benzylalkohol oder Mischungen davon, gegebenenfalls unter Zusatz von vorzugsweise aromatischen Kohlenwasserstoffen, wie Xylol, oder deren Gemischen, wie Solvesso® 100, eine Lösung der Komponente (b) in einem Lösungsmittel oder Lösungsmittelgemisch, vorzugsweise einem phenolischen Lösungsmittel, Benzylalkohol, N-Methylpyrrolidon, Dimethylformamid, 2-Methoxyäthylacetat oder 2-Äthoxyäthylacetat oder Mischungen davon, gegebenenfalls unter Zusatz von vorzugsweise aromatischen Kohlenwasserstoffen, wie Xylol, oder deren Gemischen, wie Solvesso® 100, und eine Lösung der Komponente (c) in einem Lösungsmittel oder Lösungsmittelgemisch, vorzugsweise einem phenolischen Lösungsmittel, Benzylalkohol oder N-Methylpyrrolidon, gegebenenfalls unter Zusatz von vorzugsweise aromatischen Kohlenwasserstoffen, wie Xylol, oder deren Gemischen, wie Solvesso® 100, in einem entsprechenden Mengenverhältnis mischt.

Der Schmelzklebelack kann auch in der Polyurethanchemie gebräuchliche Katalysatoren und/oder andere Hilfs- und Zusatzstoffe, wie gewöhnlich zur Modifizierung verwendete Kunstharze, z. B. Phenolharze und Melaminharze, Verlaufmittel und/oder Haftvermittler, organische und/oder anorganische Füllstoffe und Farbstoffe, enthalten. Als Katalysator wird 0,1 bis 1,0 Gew.-% Bleiacetat bevorzugt.

Geeignete Polyhydantoinharzkomponenten (a) sind z. B. in der DE-PS Nr. 15.70.552 (Bayer), der GB-PS Nr. 1.420.914 (Bayer), der DE-OS Nr. 17.95.729 (Bayer), der DE-PS Nr. 17.70.131 (Beck) und der DE-OS Nr. 20.54.602 (Beck) beschrieben. Die dort erwähnten Polyhydantoinharze können in erfindungsgemäßen Schmelzklebelacken verwendet werden, sofern ihre 1%ige Lösung in Kresol DAB V (Kresol nach dem Deutschen Arzneibuch V) bei 20° C eine spezifische Viskosität zwischen 0,2 und 1,5 hat. Geeignete Markenprodukte sind z. B.

Resistherm PH 10 (Bayer)
Resistherm PH 20 (Bayer)
Polyhydantoin VP L 2324 (Bayer)
Polyhydantoin VP L 8001 (Bayer)
Polyhydantoin VP L 8003 (Bayer)

sowie imidgruppenhaltige Polyhydantoine, wie sie in der obenerwähnten DE-OS Nr. 17.95.729 (Bayer) beschrieben sind.

Geeignete Polyhydroxypolyätherharzkomponenten (Phenoxyharzkomponenten) (b) sind z. B. die Markenprodukte Eponol und Epikote (Shell), Phenoxy Resin (Union Carbide) und Epiclone (Dai-Nippon), die in den erfindungsgemäßen Schmelzklebelacken verwendet werden können, sofern ihre 1%ige Lösung in Kresol DAB V bei 20°C eine spezifische Viskosität zwischen 0,2 und 1,5 hat. Beispiele solcher Produkte sind:

Eponol bzw. Epikote Typ OL-55 und OL-53
Epikote Typ CH-1401 und CH-1402
Bakelite Phenoxy Resins Typ PKHH, PKHC und PKHA
Epiclone H 350

sowie ester- und/oder esterimidgruppenhaltige Polyhydroxypolyätherharze, die aus Bisphenoldiepoxidharzen, z. B. Epon 828 und 1001 bis 1009 (Shell), und Dicarbonsäuren, wie Adipinsäure, und/oder Imiddicarbonsäuren hergestellt sind, wobei die Imiddicarbonsäuren z. B. aus Trimellithsäureanhydrid und Diaminen, vorzugsweise 4,4'-Diaminodiphenylmethan, oder Glykokoll hergestellt sein können.

Geeignete Polyurethanharzkomponenten (c) sind z. B. Additionsprodukte aus mindestens zweiwertigem, gegebenenfalls imidgruppenhaltigem Isocyanat, dessen Isocyanatgruppen gegebenenfalls zum Teil durch einwertige H-aktive Verbindungen, wie Phenole, ε-Caprolactam, Malonsäureester, Benzylalkohol oder Triisopropylalkohol, blockiert werden, und mindestens difunktioneller Hydroxylverbindung. Die Grundlagen der Polyurethanchemie und Ausgangsstoffe für die Herstellung von Polyurethanen sind z. B. in dem Kunststoff-Handbuch, Band VII, Polyurethane (Vieweg und Höchtlen), Hauser Verlag München, beschrieben. Alle löslichen Polyurethane können in den erfindungsgemäßen Schmelzklebelacken verwendet werden, sofern ihre 1%ige Lösung in Kresol DAB V bei 20°C eine spezifische Viskosität zwischen 0,1 und 1,0 hat.

Die Zahl der technisch wichtigen Isocyanate, die zur Herstellung solcher Polyurethanharze verwendet werden können, ist sehr groß. In Betracht kommen z. B.
Toluylen-2,4- und/oder -2,6-diisocyanat, z. B. Desmodur® T65, T80 und T100 (Bayer),
dimerisiertes Toluylen-2,4-diisocyanat, z. B. Desmodur® TT (Bayer),
Diphenylmethan-4,4'-diisocyanat, z. B. Desmodur® 44 (Bayer),
1,4-Diisocyanatobenzol, z. B. Desmodur® 14 (Bayer),
Hexamethylen-1,6-diisocyanat, z. B. Desmodur® H (Bayer),
Naphthylen-1,5-diisocyanat, z. B. Desmodur® 15 (Bayer),
Triphenylmethan-4,4',4''-triisocyanat, z. B. Desmodur® R (Bayer),
Trimethylhexamethylendiisocyanat, z. B. TMDI (Veba),
Isophorondiisocyanat, z. B. IPDI (Veba),
ein Reaktionsprodukt mit Isocyanat- und Urethangruppen aus Toluylendiisocyanat und einem Polyalkoholgemisch, z. B. Desmodur® L (Bayer) bzw., mit Kresol blockiert, Desmodur® AP stabil (Bayer),
trimerisiertes Toluylen-2,4-diisocyanat, z. B. Suprase® KN (ICI) bzw., mit Kresol blockiert, Desmodur® CT stabil (Bayer),
sowie auch imid- und/oder amidgruppenhaltige Isocyanate, wie etwa ein Reaktionsprodukt aus 2 Mol Diphenylmethandiisocyanat und 1 Mol Trimellithsäureanhydrid.

Zur Herstellung der obenerwähnten Polyurethanharze können alle Verbindungen verwendet werden, die mindetens zwei Hydroxylgruppen enthalten, vorzugsweise jedoch mehrwertige Alkohole, wie insbesondere Äthylenglycol, Diäthylenglycol, Triäthylenglycol, Butandiol, Hexantriol, Glycerin, Trimethylolpropan und Tris-(hydroxyäthyl)-isocyanurat, Polyesterpolyole, insbesondere Polyesterpolyole aus einem mindestens zweiwertigen Alkohol, wie einem der obengenannten Alkohole, und einer mindestens zweibasischen Carbonsäure, wie Adipinsäure, Phthalsäure, Isophthalsäure, Terephthalsäure oder Trimellithsäure, die vorzugsweise ein Molverhältnis von Säure zu Alkohol von 3 : 4 bis 3 : 6 aufweisen, und Polyesterimidpolyole, und zwar vorzugsweise solche des in der CH-PS Nr. 532.649 und der DE-OS Nr. 24.43.252 beschriebenen Typs.

Die Polyurethanharze werden aus den genannten Isocyanaten und Hydroxylverbindungen vorzugsweise bei einem Molverhältnis von $-NCO$ zu $-OH$ von 4 bis 6 zu 5 hergestellt, wobei die Reaktion, gegebenenfalls in Gegenwart von Isocyanatgruppen blockierenden Substanzen, so ausgeführt wird, das eine 1%ige Lösung des gebildeten Polyurethanharzes in Kresol DAB V bei 20°C eine spezifische Viskosität zwischen 0,1 und 1,0 hat.

Der erfindungsgemäße Schmelzklebelack kann auf vorzugsweise wärmebeständige lackisolierte Kupferdrähte mit Hilfe einer normalen Drahtlackiermaschine aufgebracht werden, wobei zur Erzielung der gewünschten Dicke der Klebeschicht, wie bei der Drahtlackierung allgemein üblich, mehrere Schmelzklebelackschichten aufgetragen werden können. Zur Trocknung der einzelnen Schmelzklebelackaufträge kann bei einer gegebenen Lackiergeschwindigkeit eine wesentlich tiefere Ofentemperatur, nämlich 150 bis 200°C, angewandt werden als zur Trocknung der Grundlackschichten, weil die letzteren nicht nur getrocknet, sondern auch eingebrannt werden müssen. Wenn man auf diese Weise eine Backlackschicht in einem Arbeitsgang herstellen will, benötigt man demzufolge eine Lackiermaschine mit zwei Ofenschächten, deren Temperatur separat reguliert werden kann.

Als wärmebeständige lackisolierte Drähte eignen sich alle Qualitäten, die mindestens der Wärmeklasse F entsprechen; vorzugsweise werden jedoch die wärmebeständigsten Qualitäten (d. h. Wärmeklasse $\geq$ H) verwendet, wie z. B. mit Polyesterimid, Polyamidimid, Polyhydantoin oder Polyimid isolierte Drähte. Auch mit zwei Isolierschichten, z. B. Polyesterimid als Grundschicht und Polyamidimid als Deckschicht, versehene Drähte können verwendet werden.

Mit dem erfindungsgemäßen Schmelzklebelack können aber nicht nur lackisolierte Drähte, sondern auch auf andere Weise isolierte Drähte, z. B. mit Glasseide umsponnene oder mit Isolierband isolierte Drähte, überzogen werden. Prinzipiell können auch Drähte mit beliebigem Querschnitt (fein bis grob) und Profil (rund oder flach) beschichtet werden. Die Metallseele der Wicklungsdrähte kann aus verschiedenem Material, z. B. Kupfer, Aluminium oder auch Materialien mit hohem spezifischen Widerstand, bestehen. Der erfindungsgemäße Schmelzklebelack kann aber natürlich auch auf andere

Trägermaterialien, wie Kunststoff-Folien, Metallfolien, Glasseide, Glimmerpapier und Polyamidpapier, z. B. Nomex® (DuPont), aufgetragen werden.

Aus dem erfindungsgemäßen Schmelzklebelack können durch Ausfällen in einem Nichtlöser, vorzugsweise Wasser, auch Schmelzkleberpulver hergestellt werden.

Im folgenden wird die Herstellung von Kunstharzlösungen, die zur Herstellung der erfindungsgemäßen Schmelzklebelacke verwendet werden können, beschrieben.

## A. Polyhydantoinharzlösungen

### Lösung A 1

100 Gewichtsteile einer 32%igen Lösung von Resistherm PH 10 (Bayer) in Kresol werden mit 60 Gewichtsteilen Xylol unter gutem Rühren vermischt.

| | |
|---|---|
| Festkörpergehalt | 20% |
| Viskosität bei 20° C | 2200 mPas |
| Spezifische Viskosität, 1%ige Lösung in Kresol DAB V bei 20° C | 0,95 |

### Lösung A 2

100 Gewichtsteile einer 32%igen Lösung von Resistherm PH 20 (Bayer) in Kresol werden mit 60 Gewichtsteilen Xylol unter gutem Rühren vermischt.

| | |
|---|---|
| Festkörpergehalt | 20% |
| Viskosität bei 20° C | 380 mPas |
| Spezifische Viskosität, 1%ige Lösung in Kresol DAB V bei 20° C | 0,45 |

### Lösung A 3

In einen Kolben mit Rührer und Thermometer werden 300 Gewichtsteile Kresol DAB V und 300 Gewichtsteile Xylol eingefüllt und dann auf ca. 100° C erwärmt. Danach werden unter Rühren 200 Gewichtsteile Polyhydantoin VP L 2324 (Bayer) zugegeben. Sobald das Harz gelöst ist, d. h. nach ca. 2 Stunden, wird die Lösung abgekühlt.

| | |
|---|---|
| Festkörpergehalt | 20% |
| Viskosität bei 20° C | 150 mPas |
| Spezifische Viskosität, 1%ige Lösung in Kresol DAB V bei 20° C | 0,41 |

## B. Polyhydroxypolyäther- bzw. Phenoxyharzlösungen

### Lösung B 1

In einen Kolben mit Rührer und Thermometer werden 400 Gewichtsteile Kresol DAB V und 400 Gewichtsteile Xylol eingefüllt und dann auf ca. 130° C erwärmt. Danach werden unter Rühren 200 Gewichtsteile Epikote 1401 (Shell) zugegeben. Sobald das Harz gelöst ist, d. h. nach 2 Stunden, wird die Lösung abgekühlt.

| | |
|---|---|
| Festkörpergehalt | 20% |
| Viskosität bei 20° C | 1600 mPas |
| Spezifische Viskosität, 1%ige Lösung in Kresol DAB V bei 20° C | 0,86 |

### Lösung B 2

Man verfährt wie bei der Lösung B 1, verwendet jedoch anstelle von Epikote 1401 Epikote 1402 (Shell).

| | |
|---|---|
| Festkörpergehalt | 20% |
| Viskosität bei 20° C | 450 mPas |
| Spezifische Viskosität, | |
| 1%ige Lösung in Kresol DAB V bei 20° C | 0,62 |

Lösung B 3

100 Gewichtsteile Eponol 55-L-32 (Shell) werden mit 60 Gewichtsteilen Kresol DAB V unter Rühren gut vermischt.

| | |
|---|---|
| Festkörpergehalt | 20% |
| Viskosität bei 20° C | 5100 mPas |
| Spezifische Viskosität, | |
| 1%ige Lösung in Kresol DAB V bei 20° C | 0,92 |

Lösung B 4

100 Gewichtsteile Eponol 53-L-32 (Shell) werden mit 60 Gewichtsteilen Kresol DAB V unter Rühren vermischt.

| | |
|---|---|
| Festkörpergehalt | 20% |
| Viskosität bei 20° C | 4700 mPas |
| Spezifische Viskosität, | |
| 1%ige Lösung in Kresol DAB V bei 20° C | 0,72 |

Lösung B 5

Man verfährt wie bei der Lösung B 1, verwendet jedoch anstelle von Epikote 1401 Phenoxy Resin PKHH (Union Carbide).

| | |
|---|---|
| Festkörpergehalt | 20% |
| Viskosität bei 20° C | 1200 mPas |
| Spezifische Viskosität, | |
| 1%ige Lösung in Kresol DAB V bei 20° C | 0,60 |

C. Polyurethanharzlösungen

Lösung C 1

800 Gewichtsteile Kresol DAB V, 4 Gewichtsteile Bleiacetat-trihydrat, 262,5 Gewichtsteile Triäthylenglycol, 130,5 Gewichtsteile Tris-(hydroxyäthyl)-isocyanurat, 112,5 Gewichtsteile Glykokoll und 288 Gewichtsteile Trimellithsäureanhydrid werden in der genannten Reihenfolge in ein Reaktionsgefäß mit Rührer und absteigendem Kühler eingefüllt. Unter Rühren wird erhitzt, so daß in annähernd 4 Stunden eine Temperatur von 200° C erreicht wird. Man reguliert die Temperatur so, daß möglichst viel Wasser, aber wenig Kresol destilliert, indem die Destillationstemperatur unter 110° C gehalten wird. Die Reaktion ist nach ca. 8 Stunden bei 200 bis 210° C beendet, und man läßt abkühlen. Die Ausbeute beträgt ca. 1450 Gewichtsteile Esterimidharzlösung. Dazu gibt man 485 Gewichtsteile Solvesso 100 (Esso), erhitzt unter Rühren auf 110° C und läßt unter leicht vermindertem Druck 2 bis 5% flüchtige Bestandteile, zur Hauptsache Wasser, abdestillieren. Nach beendeter Entwässerung werden 250 Gewichtsteile p,p'-Diphenylmethandiisocyanat unter Rühren zugegeben, und das Gefäß wird geschlossen. Die einsetzende exotherme Reaktion bewirkt einen Temperaturanstieg von ca. 110° C auf ca. 127° C; man läßt bei dieser Temperatur 30 Minuten lang weiterreagieren. Dann verdünnt man mit 1590 Gewichtsteilen Kresol DAB V und 1090 Gewichtsteilen Solvesso 100.

| | |
|---|---|
| Festkörpergehalt | 20% |
| Viskosität bei 20° C | 135 mPas |
| Spezifische Viskosität, | |
| 1%ige Lösung in Kresol DAB V bei 20° C | 0,31 |
| NHCOO-Gehalt der Harzfeststoffe | ca. 12 Gew.-% |

Lösung C 1.1

Man verfährt wie bei der Lösung C 1, fügt aber das p,p'-Diphenylmethandiisocyanat statt bei 110° C bei 135° C zu. Die einsetzende exotherme Reaktion bewirkt dabei ein Temperaturanstieg von ca. 135° C auf ca. 150° C; bei dieser Temperatur läßt man ca. 15 Minuten lang weiterreagieren und kühlt danach möglichst schnell auf unter 100° C ab.

| | |
|---|---|
| Festkörpergehalt | 20% |
| Viskosität bei 20° C | 900 mPas |
| Spezifische Viskosität, | |
| 1%ige Lösung in Kresol DAB V bei 20° C | 0,67 |
| NHCOO-Gehalt der Harzfeststoffe ca. | 12 Gew.-% |

Lösung C 2

240 Gewichtsteile entwässertes N-Methylpyrrolidon und 150 Gewichtsteile entwässertes Triäthylenglycol werden in ein Reaktionsgefäß mit Rührer und absteigendem Kühler eingefüllt. Unter Rühren wird der Ansatz auf 150° C erwärmt, und in Zeitabständen von 15 Minuten werden 5 Portionen à 50 Gewichtsteile p,p'-Diphenylmethandiisocyanat zugegeben. Die jeweils durch die Zugaben einsetzende exotherme Reaktion bewirkt ein Ansteigen der Ansatztemperatur um 10 bis 15° C; diese wird zwischen den Portionenzugaben wieder auf 150° C gekühlt. Nach der 5. Portion wird der Ansatz auf 170° C erhitzt und 15 Minuten lang weiter umgesetzt; dann verdünnt man mit 1350 Gewichtsteilen entwässertem Kresol DAB V.

| | |
|---|---|
| Festkörpergehalt | 20% |
| Viskosität bei 20° C | 2200 mPas |
| Spezifische Viskosität, | |
| 1%ige Lösung in Kresol DAB V bei 20° C | 0,44 |
| NHCOO-Gehalt der Harzfeststoffe ca. | 29 Gew.-% |

Lösung C 3

62 Gewichtsteile entwässertes Äthylenglycol werden in ein Reaktionsgefäß mit Rührer und absteigendem Kühler eingefüllt. Unter Rühren wird auf 160° C erwärmt und werden 50 Gewichtsteile Trimethylhexamethylendiisocyanat zugegeben. Die einsetzende exotherme Reaktion bewirkt einen Temperaturanstieg auf ca. 190° C. Man läßt 15 Minuten, unter gleichzeitiger Abkühlung auf 170° C, weiterreagieren. Dann werden in Zeitabständen von 15 Minuten 4 Portionen à 40 Gewichtsteile Trimethylhexamethylendiisocyanat zugegeben. Die dabei einsetzende exotherme Reaktion bewirkt jeweils ein erneutes Ansteigen der Produkttemperatur um 10 bis 20° C, weshalb zwischen den Portionenzugaben jeweils wieder auf 170° C abgekühlt wird. Wenn nach der 4. Portion die 15 Minuten Reaktionszeit beendet sind, kühlt man den Ansatz auf ca. 120° C und verdünnt mit 950 Gewichtsteilen Kresol DAB V.

| | |
|---|---|
| Festkörpergehalt | 20% |
| Viskosität bei 20° C | 1050 mPas |
| Spezifische Viskosität, | |
| 1%ige Lösung in Kresol DAB V bei 20° C | 0,37 |
| NHCOO-Gehalt der Harzfeststoffe ca. | 43 Gew.-% |

Lösung C 4

106 Gewichtsteile entwässertes Diäthylenglycol werden in ein Reaktionsgefäß mit Rührer und absteigendem Kühler eingefüllt. Unter Rühren wird auf 160° C erwärmt und werden 50 Gewichtsteile Trimethylhexamethylendiisocyanat zugegeben. Die einsetzende exotherme Reaktion bewirkt einen Temperaturanstieg auf ca. 190° C. Man läßt 15 Minuten, unter gleichzeitiger Abkühlung auf 170° C, weiterreagieren. Dann werden in Zeitabständen von 15 Minuten 4 Portionen à 40 Gewichtsteile Trimethylhexamethylendiisocyanat zugegeben. Die dabei einsetzende exotherme Reaktion bewirkt jeweils ein erneutes Ansteigen der Produkttemperatur um 10 bis 20° C, weshalb zwischen den Portionenzugaben jeweils wieder auf 170° C abgekühlt wird. Vor der Zugabe der 4. Portion fügt man 130 Gewichtsteile entwässertes N-Methylpyrrolidon hinzu. Wenn nach der 4. Portion die 15 Minuten Reaktionszeit beendet sind, kühlt man den Ansatz auf ca. 120° C und verdünnt mit 1150 Gewichtsteilen Kresol DAB V.

| | |
|---|---|
| Festkörpergehalt | 20% |
| Viskosität bei 20° C | 580 mPas |
| Spezifische Viskosität, | |
| 1%ige Lösung in Kresol DAB V bei 20° C | 0,16 |
| NHCOO-Gehalt der Harzfeststoffe ca. | 37 Gew.-% |

Lösung C 4.1

Man verfährt wie bei der Lösung C 4, läßt jedoch die N-Methylpyrrolidon-Zugabe weg. Zudem verdünnt man nach beendeter Reaktionszeit nicht mit 1150 Gewichtsteilen Kresol DAB V, sondern mit 1280 Gewichtsteilen Kresol DAB V.

| | |
|---|---|
| Festkörpergehalt | 20% |
| Viskosität bei 20° C | 1100 mPas |
| Spezifische Viskosität, | |
| 1%ige Lösung in Kresol DAB V bei 20° C | 0,41 |
| NHCOO-Gehalt der Harzfeststoffe ca. | 37 Gew.-% |

Lösung C 5

Man verfährt wie bei der Lösung C 4.1, verwendet jedoch anstelle von 106 Gewichtsteilen entwässertem Diäthylenglycol 150 Gewichtsteile entwässertes Triäthylenglycol und am Ende der Reaktion statt 1280 Gewichtsteilen Kresol DAB V 1415 Gewichtsteile Kresol DAB V.

| | |
|---|---|
| Festkörpergehalt | 20% |
| Viskosität bei 20° C | 950 mPas |
| Spezifische Viskosität, | |
| 1%ige Lösung in Kresol DAB V bei 20° C | 0,40 |
| NHCOO-Gehalt der Harzfeststoffe ca. | 33 Gew.-% |

Lösung C 6

450 Gewichtsteile Triäthylenglycol, 186 Gewichtsteile Äthylenglycol, 6 Gewichtsteile Bleiacetattrihydrat, 292 Gewichtsteile Adipinsäure, 150 Gewichtsteile Glykokoll und 384 Gewichtsteile Trimellithsäureanhydrid werden in der genannten Reihenfolge in ein Reaktionsgefäß mit Rührer und absteigendem Kühler eingefüllt. Unter Rühren wird erhitzt, so daß in annähernd 6,5 Stunden 220° C erreicht werden. Man reguliert die Temperatur so, daß möglichst viel Wasser, aber wenig Äthylenglycol destilliert, wobei die Destillationstemperatur 110° C nicht übersteigen darf. Danach werden die überschüssigen Glycole unter Vakuum abdestilliert, so daß das entstandene Esterimidharz einen Hydroxylgehalt von 1,5 bis 2% aufweist. Man verdünnt mit 1190 Gewichtsteilen 2-Methoxyäthylacetat. Nachdem der Ansatz 115° C erreicht hat, gibt man 175 Gewichtsteile p,p'-Diphenylmethandiisocyanat hinzu. Die einsetzende exotherme Reaktion bewirkt einen Temperaturanstieg auf ca. 130° C; man läßt bei dieser Temperatur 10 Minuten lang weiterreagieren. Dann verdünnt man mit 4260 Gewichtsteilen 2-Methoxyäthylacetat.

| | |
|---|---|
| Festkörpergehalt | 20% |
| Viskosität bei 20° C | 60 mPas |
| Spezifische Viskosität, | |
| 1%ige Lösung in Kresol DAB V bei 20° C | 0,33 |
| NHCOO-Gehalt der Harzfeststoffe ca. | 6 Gew.-% |

Lösung C 7

62 Gewichtsteile entwässertes Äthylenglycol werden in ein Reaktionsgefäß mit Rührer und absteigendem Kühler eingefüllt. Unter Rühren wird der Ansatz auf 150° C erwärmt und werden 24 Gewichtsteile Desmodur T 65 (Bayer) zugegeben. Die einsetzende exotherme Reaktion bewirkt einen Temperaturanstieg auf ca. 185° C. Man läßt 15 Minuten, unter gleichzeitiger Abkühlung auf 170° C, weiterreagieren. Dann werden in Zeitabständen von 15 Minuten 6 Portionen à 25 Gewichtsteile Desmodur T 65 zugegeben. Die jeweils einsetzende exotherme Reaktion bewirkt ein Ansteigen der Ansatztemperatur um 20 bis 30° C; dabei wird durch Kühlen zwischen den Portionenzugaben die Temperatur jeweils wieder auf 170° C reduziert. Vor der 4. und 5. Portion fügt man je 20 Gewichtsteile

und vor der 6. Portion 40 Gewichtsteile entwässertes N-Methylpyrrolidon zu. Wenn die Reaktionszeit beendet ist, verdünnt man mit 865 Gewichtsteilen Kresol DAB V.

| | |
|---|---|
| Festkörpergehalt | 20% |
| Viskosität bei 20° C | 1400 mPas |
| Spezifische Viskosität, | |
| 1%ige Lösung in Kresol DAB V bei 20° C | 0,23 |
| NHCOO-Gehalt der Harzfeststoffe ca. | 50 Gew.-% |

Lösung C 8

106 Gewichtsteile entwässertes Diäthylenglycol werden in ein Reaktionsgefäß mit Rührer und absteigendem Kühler eingefüllt. Unter Rühren wird der Ansatz auf 160° C erwärmt und werden 14 Gewichtsteile Desmodur T 65 (Bayer) zugegeben. Die einsetzende exotherme Reaktion bewirkt einen Temperaturanstieg auf ca. 175° C. Man läßt 15 Minuten unter Abkühlung auf 170° C weiterreagieren. Dann werden in Zeitabständen von 15 Minuten 4 Portionen à 40 Gewichtsteile Desmodur T 65 zugegeben. Die jeweils einsetzende exotherme Reaktion bewirkt ein Ansteigen der Ansatztemperatur um 30 bis 40° C; diese wird zwischen den Portionenzugaben durch Kühlen jeweils wieder auf 170° C einreguliert. Vor der Zugabe der 4. Portion fügt man 100 Gewichtsteile entwässertes N-Methylpyrrolidon hinzu. Wenn nach der 4. Portion die 15 Minuten Reaktionszeit beendet sind, verdünnt man mit 1020 Gewichtsteilen entwässertem Kresol DAB V.

| | |
|---|---|
| Festkörpergehalt | 20% |
| Viskosität bei 20° C | 3100 mPas |
| Spezifische Viskosität, | |
| 1%ige Lösung in Kresol DAB V bei 20° C | 0,48 |
| NHCOO-Gehalt der Harzfeststoffe ca. | 42 Gew.-% |

Lösung C 9

62 Gewichtsteile entwässertes Äthylenglycol werden in ein Reaktionsgefäß mit Rührer und absteigendem Kühler eingefüllt. Unter Rühren wird der Ansatz auf 160° C erwärmt und werden 48 Gewichtsteile Hexamethylendiisocyanat zugegeben. Die einsetzende exotherme Reaktion bewirkt einen Temperaturanstieg auf ca. 190° C. Man läßt 15 Minuten, unter Abkühlung auf 170° C, weiterreagieren. Dann werden in Zeitabständen von 15 Minuten 3 Portionen à 40 Gewichtsteile Hexamethylendiisocyanat zugegeben. Die jeweils einsetzende exotherme Reaktion bewirkt ein Ansteigen der Ansatztemperatur um 10 bis 20° C; diese wird durch Kühlen zwischen den Portionenzugaben jeweils wieder auf 170° C einreguliert. Vor der Zugabe der 3. Portion fügt man 100 Gewichtsteile entwässertes N-Methylpyrrolidon hinzu. Wenn nach der 3. Portion die 15 Minuten Reaktionszeit beendet sind, kühlt man den Ansatz auf ca. 120° C und verdünnt mit 820 Gewichtsteilen Kresol DAB V.

| | |
|---|---|
| Festkörpergehalt | 20% |
| Viskosität bei 20° C | 1350 mPas |
| Spezifische Viskosität, | |
| 1%ige Lösung in Kresol DAB V bei 20° C | 0,45 |
| NHCOO-Gehalt der Harzfeststoffe ca. | 51 Gew.-% |

Lösung C 10

400 Gewichtsteile N-Methylpyrrolidon und 700 Gewichtsteile Xylol werden in ein Reaktionsgefäß mit Rührer und absteigendem Kühler eingefüllt. Unter Rühren wird erhitzt und werden innerhalb von ca. 40 Minuten 300 Gewichtsteile flüchtige Bestandteile zur Entwässerung abdestilliert. Nachdem man den Ansatz auf ca. 80° C gekühlt hat, gibt man 96 Gewichtsteile Trimellithsäureanhydrid und 250 Gewichtsteile p,p'-Diphenylmethandiisocyanat zu. Unter Rühren wird der Ansatz langsam auf 140° C erhitzt; dabei wird mit einer an den Rückflußkühler angeschlossenen Gasuhr die $CO_2$-Entwicklung überwacht. Wenn 22,4 Liter $CO_2$ entwickelt worden sind, kühlt man den Ansatz auf 117° C und gibt 75 Gewichtsteile entwässertes Triäthylenglycol zu. Die einsetzende exotherme Reaktion bewirkt einen Temperaturanstieg auf ca. 135° C. Man läßt 30 Minuten lang bei dieser Temperatur weiterreagieren.

Dann verdünnt man mit 200 Gewichtsteilen entwässertem Kresol DAB V, 285 Gewichtsteilen N-Methylpyrrolidon und 285 Gewichtsteilen Xylol.

| | | |
|---|---|---|
| Festkörpergehalt | | 20% |
| Viskosität bei 20° C | | 830 mPas |
| Spezifische Viskosität, | | |
| 1%ige Lösung in Kresol DAB V bei 20° C | | 0,6 |
| NHCOO-Gehalt der Harzfeststoffe | ca. | 16 Gew.-% |

Lösung C 11

In einen kleinen Reaktionsapparat mit Rührer, Thermometer und Kühler werden 960 Gewichtsteile Trimellithsäureanhydrid, 75 Gewichtsteile Glykokoll, 396 Gewichtsteile Diaminodiphenylmethan, 96 Gewichtsteile Äthylenglycol, 150 Gewichtsteile Triäthylenglycol, 268 Gewichtsteile Trimethylolpropan, 9 Gewichtsteile Bleiacetat und 3000 Gewichtsteile Kresol DAB V eingefüllt. Unter Rühren wird erhitzt, so daß in annähernd 4 Stunden 200° C erreicht werden. Man reguliert die Temperatur so, daß möglichst viel Wasser, aber wenig Kresol DAB V destilliert. Nachdem man die Temperatur 8 bis 10 Stunden lang auf 200 bis 210° C gehalten hat, ist die Reaktion beendet. Man verdünnt mit 1320 Gewichtsteilen Kresol DAB V, 1320 Gewichtsteilen 2-Methoxyäthylacetat und 2190 Gewichtsteilen Xylol. Man reguliert die Ansatztemperatur auf 110°C ein und gibt portionenweise 1955 Gewichtsteile Desmodur AP stabil (Bayer) zu. Nachdem das Desmodur AP stabil gelöst ist, verdünnt man mit 2200 Gewichtsteilen Kresol DAB V, 485 Gewichtsteilen 2-Methoxyäthylacetat und 4000 Gewichtsteilen Xylol.

| | | |
|---|---|---|
| Festkörpergehalt | | 20% |
| Viskosität bei 20° C | | 60 mPas |
| Spezifische Viskosität, | | |
| 1%ige Lösung in Kresol DAB V bei 20° C | | 0,15 |
| NHCOO-Gehalt der Harzfeststoffe | ca. | 8 Gew.-% |

Lösung C 11.1

In einen kleinen Reaktionsapparat mit Rührer, Thermometer und Kühler werden 960 Gewichtsteile Trimellithsäureanhydrid, 75 Gewichtsteile Glykokoll, 396 Gewichtsteile Diaminodiphenylmethan, 96 Gewichtsteile Äthylenglycol, 150 Gewichtsteile Triäthylenglycol, 268 Gewichtsteile Trimethylolpropan, 9 Gewichtsteile Bleiacetat und 3000 Gewichtsteile Kresol DAB V eingefüllt. Unter Rühren wird erhitzt, so daß in annähernd 4 Stunden 200° C erreicht werden. Man reguliert die Temperatur so, daß möglichst viel Wasser, aber wenig Kresol DAB V destilliert. Nachdem man die Temperatur 8 bis 10 Stunden lang auf 200 bis 210° C gehalten hat, ist die Reaktion beendet. Man verdünnt mit 1320 Gewichtsteilen Kresol DAB V und 2190 Gewichtsteilen Xylol. Nachdem der Ansatz 150°C erreicht hat, gibt man 1955 Gewichtsteile Desmodur AP stabil (Bayer) zu und läßt ca. 20 Minuten lang bei 140° C reagieren. Danach verdünnt man mit 2200 Gewichtsteilen entwässertem Kresol DAB V, 1805 Gewichtsteilen 2-Methoxyäthylacetat und 4000 Gewichtsteilen Xylol.

| | | |
|---|---|---|
| Festkörpergehalt | | 20% |
| Viskosität bei 20° C | | 800 mPas |
| Spezifische Viskosität, | | |
| 1%ige Lösung in Kresol DAB V bei 20° C | | 0,58 |
| NHCOO-Gehalt der Harzfeststoffe | ca. | 8 Gew.-% |

Beispiele 1.1 bis 1.28

Die oben beschriebenen Lösungen wurden in den in Tabelle I angegebenen Mengen gemischt, um erfindungsgemäße Schmelzklebelacke herzustellen. Mit diesen Schmelzklebelacken wurden in der unten beschriebenen Weise Backlackdrähte hergestellt, um die ebenfalls in Tabelle I angegebenen Eigenschaften in der weiter unten beschriebenen Weise zu bestimmen. Die Beispiele 1.1 bis 1.9 sind auch in Fig. 1 eingetragen.

Tabelle I

| Beispiel | Zusammensetzung | | | | | | Eigenschaften | | | | nach Verbackung 30 Min./220°C | | | | |
|---|---|---|---|---|---|---|---|---|---|---|---|---|---|---|---|
| | Polyhydantoinharzlösung 20%ig | | Phenoxyharzlösung 20%ig | | Polyurethanharzlösung 20%ig | | Fahrspanne ($\Delta V$) | verbackbar in 30 Min. bei | Mindesthärtungszeit in Min. bei | | Klebekraft in N bei | | | Zeitstandfestigkeits-Grenzwert für >1 Std. in N bei | |
| Nr. | Nr. | Gew.-% | Nr. | Gew.-% | Nr. | Gew.-% | m/min | C | 180 C | 220 C | 20 C | 160 C | 200 C | 160 C | 200 C |
| 1.1 | A 1 | 75 | B 1 | 20 | C 1 | 5 | 15 | 200 | – | 15 | 104 | 55 | 25 | 35 | 3 |
| 1.2 | A 1 | 75 | B 1 | 12,5 | C 1 | 12,5 | 10 | 220 | – | 10 | 105 | 60 | 27 | 33 | 5 |
| 1.3 | A 1 | 75 | B 1 | 5 | C 1 | 20 | 5–10 | 220 | – | 10 | 110 | 52 | 22 | 34 | 3 |
| 1.4 | A 1 | 70 | B 1 | 24 | C 1 | 6 | 15 | 200 | – | 15 | 120 | 61 | 30 | 30 | 3 |
| 1.5 | A 1 | 50 | B 1 | 45 | C 1 | 5 | 15 | 180 | 120 | 15 | 126 | 45 | 25 | 16 | 3 |
| 1.6 | A 1 | 50 | B 1 | 40 | C 1 | 10 | 10–15 | 180 | 120 | 10 | 140 | 50 | 28 | 17 | 4 |
| 1.7 | A 1 | 50 | B 1 | 25 | C 1 | 25 | 5–10 | 220 | – | 10 | 115 | 42 | 22 | 11 | 3 |
| 1.8 | A 1 | 30 | B 1 | 56 | C 1 | 14 | 10 | 180 | 120 | 20 | 120 | 30 | 10 | 6 | 2 |
| 1.9 | A 1 | 30 | B 1 | 35 | C 1 | 35 | 5 | 220 | – | 10 | 125 | 43 | 28 | 5 | 3 |
| 1.10 | A 2 | 50 | B 1 | 40 | C 1 | 10 | 10–15 | 180 | 120 | 10 | 135 | 48 | 27 | 15 | 4 |
| 1.11 | A 3 | 50 | B 1 | 40 | C 1 | 10 | 10–15 | 180 | 120 | 10 | 125 | 47 | 29 | 16 | 3 |
| 1.12 | A 1 | 50 | B 2 | 40 | C 1 | 10 | 10–15 | 180 | 120 | 10 | 120 | 46 | 28 | 17 | 3 |
| 1.13 | A 1 | 50 | B 3 | 40 | C 1 | 10 | 10–15 | 180 | 120 | 10 | 132 | 52 | 30 | 17 | 4 |
| 1.14 | A 1 | 50 | B 4 | 40 | C 1 | 10 | 10–15 | 180 | 120 | 10 | 126 | 48 | 25 | 16 | 3 |
| 1.15 | A 1 | 50 | B 5 | 40 | C 1 | 10 | 10–15 | 180 | 120 | 10 | 137 | 52 | 30 | 17 | 4 |

Tabelle I (Fortsetzung)

| Beispiel | Zusammensetzung | | | | | | Eigenschaften | | | | nach Verbackung 30 Min./220°C | | | | |
|---|---|---|---|---|---|---|---|---|---|---|---|---|---|---|---|
| | Polyhydantoin-harzlösung 20%ig | | Phenoxy-harzlösung 20%ig | | Polyurethan-harzlösung 20%ig | | Fahr-spanne ($\Delta V$) | verback-bar in 30 Min. bei | Mindest-härtungszeit in Min. bei | | Klebekraft in N bei | | | Zeitstandfestig-keits-Grenzwert für >1 Std. in N bei | |
| Nr. | Nr. | Gew.-% | Nr. | Gew.-% | Nr. | Gew.-% | m/min | °C | 180°C | 220°C | 20°C | 160°C | 200°C | 160°C | 200°C |
| 1.16 | A 1 | 50 | B 1 | 40 | C 2 | 10 | 10–15 | 180 | 150 | 8 | 142 | 50 | 34 | >37 | 13 |
| 1.17 | A 1 | 50 | B 1 | 40 | C 3 | 10 | 10–15 | 180 | 90 | 5 | 127 | 63 | 42 | 32 | 16 |
| 1.18 | A 1 | 50 | B 1 | 40 | C 4 | 10 | 10–15 | 180 | 120 | 10 | 143 | 62 | 40 | 32 | 10 |
| 1.19 | A 1 | 50 | B 1 | 40 | C 4.1 | 10 | 10–15 | 180 | 120 | 10 | 142 | 63 | 40 | 32 | 12 |
| 1.20 | A 1 | 50 | B 1 | 40 | C 5 | 10 | 10–15 | 180 | 120 | 10 | 148 | 51 | 36 | 32 | 10 |
| 1.21 | A 1 | 50 | B 1 | 40 | C 6 | 10 | 15 | 180 | 120 | 20 | 110 | 38 | 12 | 8 | 2 |
| 1.22 | A 1 | 50 | B 1 | 40 | C 7 | 10 | 10–15 | 180 | 90 | 5 | 140 | 74 | 50 | >37 | 15 |
| 1.23 | A 1 | 50 | B 1 | 40 | C 8 | 10 | 10–15 | 180 | 120 | 7 | 128 | 71 | 44 | >37 | 14 |
| 1.24 | A 1 | 50 | B 1 | 40 | C 9 | 10 | 10–15 | 180 | 90 | 5 | 130 | 59 | 37 | 33 | 16 |
| 1.25 | A 1 | 50 | B 1 | 40 | C 10 | 10 | 5–7 | 220 | – | 10 | 110 | 54 | 30 | 27 | 8 |
| 1.26 | A 1 | 50 | B 1 | 40 | C 11 | 10 | 5–10 | 180 | 120 | 10 | 122 | 48 | 18 | 16 | 4 |
| 1.27 | A 1 | 50 | B 1 | 40 | C 11.1 | 10 | 5–10 | 180 | 120 | 10 | 117 | 55 | 21 | 21 | 5 |
| 1.28 | A 1 | 50 | B 1 | 33 | C 6 | 17 | 10–15 | 180 | 120 | 10 | 117 | 45 | 21 | 13 | 4 |

Vergleichsbeispiele 2.1 bis 2.13

Die oben beschriebenen Lösungen wurden in den in Tabelle II angegebenen Mengen gemischt, um Vergleichsschmelzklebelacke herzustellen. Auch mit diesen Vergleichslacken wurden in der unten beschriebenen Weise Backlackdrähte hergestellt, um die ebenfalls in Tabelle II angegebenen Eigenschaften in der weiter unten beschriebenen Weise zu bestimmen. Die Vergleichsbeispiele sind ebenfalls in Fig. 1 eingetragen.

Tabelle II

| Vergleichsbeispiel | Zusammensetzung | | | | | | Eigenschaften | | | | nach Verbackung 30 Min./220°C (10 Min./250°C) | | | | |
|---|---|---|---|---|---|---|---|---|---|---|---|---|---|---|---|
| | Polyhydantoinharzlösung 20%ig | | Phenoxyharzlösung 20%ig | | Polyurethanharzlösung 20%ig | | Fahrspanne ($\Delta V$) | verbackbar in 30 Min. bei | Mindesthärtungszeit in Min. bei | | Klebekraft in N bei | | | Zeitstandfestigkeits-Grenzwert für >1 Std. in N bei | |
| Nr. | Nr. | Gew.-% | Nr. | Gew.-% | Nr. | Gew.-% | m/min | °C | 180°C | 220°C (250°C) | 20°C | 160°C | 200°C | 160°C | 200°C |
| 2.1 | A 1 | 50 | B 1 | 17 | C 1 | 33 | 3 | 250 | – | (5–10) | (100) | (35) | (16) | (12) | (3) |
| 2.2 | A 1 | 50 | B 1 | 10 | C 1 | 40 | 2 | 250 | – | (5–10) | (95) | (30) | (7) | (11) | (2) |
| 2.3 | A 1 | 30 | B 1 | 14 | C 1 | 56 | 2 | 250 | – | (5–10) | (110) | (35) | (4) | (5) | (2) |
| 2.4 | A 1 | 10 | B 1 | 72 | C 1 | 18 | 15 | 170 | 120 | 30 | 95 | 6 | 4 | 3 | 2 |
| 2.5 | A 1 | 10 | B 1 | 45 | C 1 | 45 | 5 | 250 | – | (5–10) | (90) | (8) | (3) | (3) | (2) |
| 2.6 | A 1 | 10 | B 1 | 18 | C 1 | 72 | 2 | 250 | – | (5–10) | (95) | (10) | (4) | (3) | (2) |
| 2.7 | A 1 | 70 | B 1 | 30 | – | – | 10–15 | 220 | – | 30 | 105 | 40 | 22 | 12 | 2 |
| 2.8 | A 1 | 50 | B 1 | 50 | – | – | 10–15 | 180 | >300 | >60 | 110 | 18 | 7 | <4 | <1 |
| 2.9 | A 1 | 30 | B 1 | 70 | – | – | >15 | 180 | >300 | >60 | 90 | 4 | 2 | <1 | <1 |
| 2.10 | A 1 | 100 | – | – | – | – | 10–15 | 250 | – | (ca. 5) | (120) | (65) | (46) | (>36) | (12) |
| 2.11 | – | – | B 1 | 100 | – | – | >15 | <160 | >300 | >60 | 75 | 2 | <1 | <1 | <1 |
| 2.12 | – | – | – | – | C 1 | 100 | 10–15 | 200 | – | >60 | 100 | 8 | 3 | 2 | <1 |
| 2.13 | – | – | B 1 | 80 | C 1 | 20 | 10–15 | 170 | 120 | 30 | 86 | 6 | 4 | 3 | 2 |

Beispiel 2.13 ≙ Beispiel 2 aus DE-OS 24 43 252

## Ermittlung der Eigenschaften

Zur Ermittlung der in den Tabellen I und II angegebenen Eigenschaften wurde ein mit einem Polyesterimid der Wärmeklasse H lackierter Kupferdraht, bei dem die Dicke der Polyesterimidschicht der Auftragsklasse $C_1$ nach Normblatt Nr. 23745 (1967) des Vereins Schweizerischer Maschinenindustrieller (Kirchweg 4, Postfach, Zürich; im folgenden mit VSM bezeichnet) bzw. der entsprechenden Auftragsklasse 1 gemäß Publikation Nr. 182 (1964) des CEI entspricht, mit den einzelnen Schmelzklebelacken lackiert, bis die Auftragsklasse $C_2$ nach VSM bzw. 2 nach CEI erreicht war. Die gemessenen Dimensionen der erhaltenen Backlackdrähte betrugen:

Durchmesser des blanken Kupferdrahtes:
$d = 0{,}40$ mm

Durchmesser über der Polyesterimidisolation:
$d_1 = 0{,}433 \pm 0{,}002$ mm

Durchmesser über der Schmelzkleberschicht:
$d_2 = 0{,}460 \pm 0{,}002$ mm

Die Schmelzklebelacke wurden mit einer Drahtlackiermaschine mit Düsenauftragssystem und vertikalem Trocknungsofen auf den mit Esterimidlack isolierten Draht aufgetragen. Die Düseneinstellung wurde so gewählt, daß in drei Durchzügen im Mittel die oben angegebenen 27 µm ($d_2 - d_1$) Schmelzkleber aufgetragen wurden. Der Trocknungsofen war 2,5 m lang; seine Temperatur betrug in der Eintrittszone 80° C und in der Austrittszone 300° C.

## Ermittlung der Fahrspanne

Beim Auftragen der Schmelzklebelacke wurde die Lackierungsgeschwindigkeit variiert, während alle anderen Bedingungen gleich gehalten wurden. Bei Geschwindigkeiten zwischen 15 m/min und 50 m/min wurden Drahtproben entnommen und untersucht, um die Fahrspanne $\Delta V$ (m/min) zu ermitteln. Die Fahrspanne ist der Geschwindigkeitsbereich, in dem die aufgetragene Schmelzkleberschicht richtig getrocknet ist, d. h., daß sie wickelfest und verbackbar ist und bleibt. Ist die Trocknung zu schwach, so können die mit Schmelzkleber beschichteten Drähte im Extremfall schon auf der Spule zusammenkleben, oder sie bleiben nicht »wickelfest«, d. h., die Lackschicht löst sich beim Wickeln ab. Ist die Trocknung zu stark, so ist der Schmelzkleber nicht mehr verbackbar, d. h., er ist schon teilweise oder vollständig vernetzt. Geeignete Schmelzklebelacke müssen eine Fahrspanne $\Delta V$ von mindestens 5 m/min aufweisen. Nur Drähte, die optimal getrocknet waren, wurden für die folgenden Prüfungen verwendet.

## Ermittlung der Verbackbarkeit

Zur Prüfung der Verbackbarkeit wurden Drahtwendeln mit einem Innendurchmesser (lichte Weite) von 6,3 mm und einer Länge von ca. 75 mm auf einem Dorn mit 6,3 mm Durchmesser unter Belastung in der Wärme verbacken. Die Versuchsanordnung ist in Fig. 2 dargestellt, worin 1 ein Ringgewicht von 75 g, 2 die Drahtwendel und 3 die Haltevorrichtung sind. Die Verbackungsfestigkeit wurde in der Anordnung gemäß Fig. 3, die in der CEI-Publikation 290 (1969) beschrieben ist, geprüft, wobei die verbackene Drahtwendel wiederum mit 2 bezeichnet ist.

## Ermittlung der Mindesthärtungszeit

Die Mindesthärtungszeit in Minuten bei 180, 220 bzw. 250°C wurde bestimmt, indem die bei der betreffenden Temperatur verschieden lange verbackenen Drahtwendeln in der Prüfungsanordnung gemäß Fig. 3 bei 200°C eine Stunde lang mit K = 2N belastet wurden. Die Mindesthärtungszeit ist die kürzeste Verbackungszeit, bei der die Drahtwendeln in diesem Test weder auseinanderbrechen noch sich um mehr als 1 mm durchbiegen.

## Ermittlung der Klebekraft

Die Klebekraft ist diejenige Kraft, die bei der angegebenen Temperatur momentan aufgewendet werden muß, um eine verbackene Drahtwendel in der Prüfungsanordnung gemäß Fig. 3 auseinanderzureißen.

Ermittlung der Zeitstandfestigkeits-Grenzwerte

Die Zeitstandfestigkeits-Grenzwerte wurden ermittelt, indem eine verbackene Drahtwendel bei der angegebenen Temperatur in der Prüfanordnung gemäß Fig. 3 mit verschiedenen Kräften K belastet wurde. Der Zeitstandfestigkeits-Grenzwert ist die größte Kraft K, mit der die Drahtwendel mindestens eine Stunde lang belastet werden kann, ohne auseinanderzubrechen oder sich um mehr als 1 mm durchzubiegen.

Ermittlung der Wärmeschockfestigkeit

Die Wärmeschockfestigkeit wurde nach der in der CEI-Publikation 251.1 (1968) beschriebenen Methode ermittelt. Sie ist in der folgenden Tabelle III für mit verschiedenen erfindungsgemäßen Schmelzklebelacken bzw. einem Vergleichsschmelzklebelack beschichtete Kupferdrähte mit einer Polyesterimidharz-Grundisolation sowie für mit einem Esterimid-Tränklack der Wärmeklasse H getränkte Kupferdrähte mit einer Polyesterimidharz-Grundisolation angegeben.

Ermittlung der Twist-Lebensdauer

Die Twist-Lebensdauer bei 250 und 300°C wurde nach der in der CEI-Publikation 172 (1966) beschriebenen Methode ermittelt. Sie ist ebenfalls in der folgenden Tabelle III für mit verschiedenen erfindungsgemäßen Schmelzklebelacken bzw. einem Vergleichsschmelzklebelack beschichtete Kupferdrähte mit einer Polyesterimidharz-Grundisolation sowie für mit einem Esterimid-Tränklack der Wärmeklasse H getränkte Kupferdrähte mit einer Polyesterimidharz-Grundisolation angegeben.

Aus den Tabellen I bis III ist der technische Fortschritt, der mit den erfindungsgemäßen Schmelzklebelacken erzielt wird, eindeutig ersichtlich.

Tabelle III

Thermische Eigenschaften

| | Wärmeschockfestigkeit, gut auf einfachen Durchmesser (d) bei | Twist-Lebensdauer in Stunden bei 300°C | Twist-Lebensdauer in Stunden bei 250°C |
|---|---|---|---|
| Mit Polyesterimidharz isolierter Kupferdraht<br>d 0,40 mm<br>$d_1$ 0,433 ± 0,002 mm | 220°C | 130 | 1050 |
| Mit Polyesterimidharz isolierter Kupferdraht, d und $d_1$ wie oben, überlackiert mit Lack von Beispiel 1.6<br>$d_2$ 0,460 ± 0,002 mm | 250°C | 207 | 1850 |
| Mit Polyesterimidharz isolierter Kupferdraht, d und $d_1$ wie oben, überlackiert mit Lack von Beispiel 1.17<br>$d_2$ 0,460 ± 0,002 mm | 250°C | 225 | 1790 |
| Mit Polyesterimidharz isolierter Kupferdraht, d und $d_1$ wie oben, überlackiert mit Lack von Beispiel 1.23<br>$d_2$ 0,460 ± 0,002 mm | 250°C | 216 | 1920 |
| Mit Polyesterimidharz isolierter Kupferdraht, d und $d_1$ wie oben, überlackiert mi Lack von Vergleichsbeispiel 2.13<br>(Beispiel 2 der DE-OS Nr, 24 43 252) | 220°C | 113 | 1364 |
| Mit Polyesterimidharz isolierter Kupferdraht, d und $d_1$ wie oben, getränkt mit Lack SIB 759 (Esterimid-Tränklack der Wärmeklasse H) | – | 108 | 896 |

## Patentansprüche

1. Thermohärtbarer Schmelzklebelack, dadurch gekennzeichnet, daß er eine Lösung einer thermohärtbaren Mischung in einem Lösungsmittel oder Lösungsmittelgemisch ist, das bei einer Temperatur im Bereich von 50 bis 230°C, vorzugsweise 130 bis 210°C, siedet, wobei die thermohärtbare Mischung

(a) Polyhydantoinharz von linearer und/oder verzweigter Struktur, das der Formel

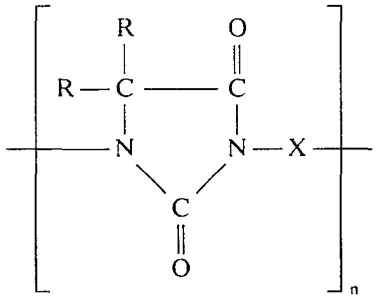

worin die Symbole R gleiche oder verschiedene Bedeutung haben und jeweils Wasserstoff oder einen Alkylrest mit 1 bis 4 C-Atomen bedeuten, die Symbole X gleiche oder verschiedene Bedeutung haben und jeweils ein aliphatisches, cycloaliphatisches, heterocyclisches und/oder aromatisches Bindeglied darstellen und n eine positive Zahl mit einem der spezifischen Viskosität entsprechenden Wert ist, entspricht und dessen 1%ige Lösung in Kresol DAB V bei 20°C eine spezifische Viskosität zwischen 0,2 und 1,5 hat,

(b) Polyhydroxypolyäther- bzw. Phenoxyharz von linearer und/oder verzweigter Struktur, das der Formel

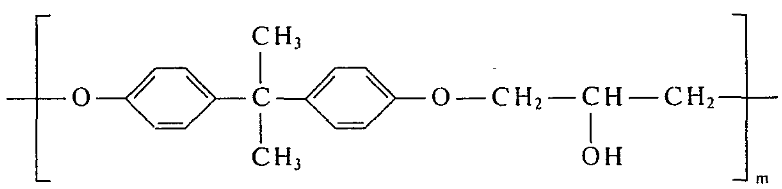

oder

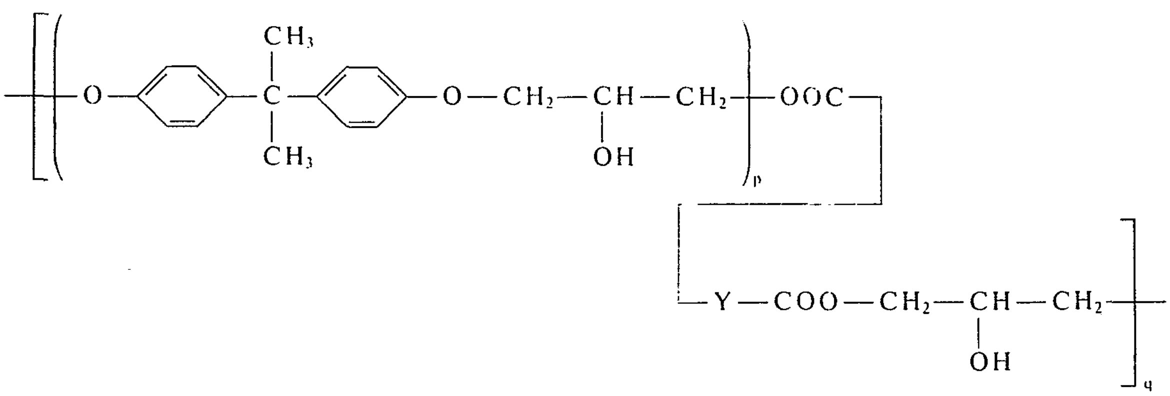

worin Y einen zweiwertigen aliphatischen, cycloaliphatischen, heterocyclischen und/oder aromatischen Rest bedeutet, m eine positive Zahl mit einem der spezifischen Viskosität entsprechenden Wert ist, p eine positive Zahl mit einem durchschnittlichen Wert von 1 bis 30 ist und q eine positive Zahl mit einem der spezifischen Viskosität entsprechenden Wert ist, entspricht und dessen 1%ige Lösung in Kresol DAB V bei 20°C eine spezifische Viskosität zwischen 0,2 und 1,5 hat, und

(c) Polyurethanharz von linearer und/oder verzweigter Struktur, das zu mindestens 4 Gew.-% aus der Urethangruppierung der Formel

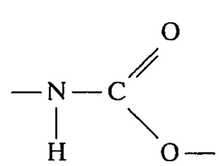

besteht und dessen 1%ige Lösung in Kresol DAB V bei 20°C eine spezifische Viskosität zwischen 0,1 und 1,0 hat,

in solchen Mengen enthält, daß die Zusammensetzung der thermohärtbaren Mischung, bezogen auf die Harzfeststoffe, in dem in Fig. 1 dargestellten ternären System innerhalb des Siebenecks zu liegen kommt, dessen Ecken durch die folgenden Zusammensetzungen definiert sind:

| | Komponente a) | Komponente b) | Komponente c) |
|---|---|---|---|
| 1. | 80 Gew.-% | 5 Gew.-% | 15 Gew.-% |
| 2. | 80 Gew.-% | 17 Gew.-% | 3 Gew.-% |
| 3. | 32 Gew.-% | 65 Gew.-% | 3 Gew.-% |
| 4. | 20 Gew.-% | 65 Gew.-% | 15 Gew.-% |
| 5. | 20 Gew.-% | 40 Gew.-% | 40 Gew.-% |
| 6. | 30 Gew.-% | 30 Gew.-% | 40 Gew.-% |
| 7. | 70 Gew.-% | 5 Gew.-% | 25 Gew.-% |

2. Schmelzklebelack nach Anspruch 1, dadurch gekennzeichnet, daß er auch Katalysatoren und/oder andere Hilfs- und Zusatzstoffe, wie zur Modifizierung dienende Kunstharze, z. B. Phenolharze und Melaminharze, Verlaufmittel und/oder Haftvermittler, organische und/oder anorganische Füllstoffe und Farbstoffe, enthält.

3. Schmelzklebelack nach Anspruch 1 oder 2, dadurch gekennzeichnet, daß die Komponente (c) ein Additionsprodukt aus mindestens zweiwertigem, gegebenenfalls imidgruppenhaltigem Isocyanat, dessen Isocyanatgruppen gegebenenfalls zum Teil durch einwertige H-aktive Verbindungen, wie Phenole, ε-Caprolactam, Malonsäureester, Benzylalkohol oder Triisopropylalkohol, blockiert sind, und mindestens difunktioneller Hydroxylverbindung ist.

4. Schmelzklebelack nach Anspruch 1 oder 2, dadurch gekennzeichnet, daß die Komponente (c) ein Additionsprodukt aus Hexamethylen-1,6-diisocyanat, Triphenylmethan-4,4',4''-triisocyanat, Toluylen-2,4- und/oder -2,6-diisocyanat, dimerisiertem Toluylen-2,4-diisocyanat, 1,4-Diisocyanatobenzol, Naphthylen-1,5-diisocyanat, Diphenylmethan-4,4'-diisocyanat, Trimethyl-hexamethylen-diisocyanat oder Isophoron-diisocyanat und mindestens difunktioneller Hydroxylverbindung ist.

5. Schmelzklebelack nach Anspruch 1 oder 2 oder 4, dadurch gekennzeichnet, daß die Komponente (c) ein Additionsprodukt aus mindestens zweiwertigem, gegebenenfalls imidgruppenhaltigem Isocyanat, dessen Isocyanatgruppen gegebenenfalls zum Teil durch einwertige H-aktive Verbindungen, wie Phenole, ε-Caprolactam, Malonsäureester, Benzylalkohol oder Triisopropylalkohol, blockiert sind, und einem mindestens zweiwertigen Alkohol, wie Äthylenglycol, Diäthylenglycol, Triäthylenglycol, Butandiol, Hexantriol, Glycerin, Trimethylolpropan, Tris-(hydroxyäthyl)-isocyanurat, einem Polyesterpolyol, z. B. einem Polyesterpolyol aus einem mindestens zweiwertigen Alkohol, wie einem der obengenannten Alkohole, und einer mindestens zweibasischen Carbonsäure, wie Adipinsäure, Phthalsäure, Isophthalsäure, Terephthalsäure oder Trimellithsäure, das vorzugsweise ein Molverhältnis von Säure zu Alkohol von 3 : 4 bis 3 : 6 aufweist, oder einem Polyesterimidpolyol ist.

6. Schmelzklebelack nach einem der Ansprüche 3 bis 5, dadurch gekennzeichnet, daß die Komponente (c) ein Polyadditionsprodukt aus Isocyanat und Hydroxylverbindung im Molverhältnis von Isocyanatgruppen zu Hydroxylgruppen von 4 bis 6 zu 5 ist.

7. Schmelzklebelack nach einem der Ansprüche 2 bis 6, dadurch gekennzeichnet, daß er als Katalysator 0,1 bis 1,0 Gew.-% Bleiacetat enthält.

8. Verfahren zur Herstellung des Schmelzklebelackes nach einem der Ansprüche 1 bis 7, dadurch gekennzeichnet, daß man eine Lösung der Komponente (a) in einem Lösungsmittel oder Lösungsmittelgemisch, vorzugsweise einem phenolischen Lösungsmittel oder Benzylalkohol oder Mischungen davon, gegebenenfalls unter Zusatz von vorzugsweise aromatischen Kohlenwasserstoffen, wie Xylol, oder deren Gemischen, eine Lösung der Komponente (b) in einem Lösungsmittel oder Lösungsmittelgemisch, vorzugsweise einem phenolischen Lösungsmittel, Benzylalkohol, N-Methylpyrrolidon, Dimethylformamid, 2-Methoxyäthylacetat oder 2-Äthoxyäthylacetat oder Mischungen davon, gegebenenfalls unter Zusatz von vorzugsweise aromatischen Kohlenwasserstoffen, wie Xylol, oder deren Gemischen, und eine Lösung der Komponente (c) in einem Lösungsmittel oder Lösungsmittelgemisch, vorzugsweise einem phenolischen Lösungsmittel, Benzylalkohol oder N-Methylpyrrolidon, gegebenenfalls unter Zusatz von vorzugsweise aromatischen Kohlenwasserstoffen, wie Xylol, oder deren Gemischen, in einem entsprechenden Mengenverhältnis mischt.

9. Verfahren nach Anspruch 8, dadurch gekennzeichnet, daß man auch Katalysatoren und/oder andere Hilfs- und Zusatzstoffe, wie zur Modifizierung dienende Kunstharze, z. B. Phenolharze und

Melaminharze, Verlaufmittel und/oder Haftvermittler, organische und/oder anorganische Füllstoffe und Farbstoffe, zusetzt.

10. Verwendung des Schmelzklebelackes nach einem der Ansprüche 1 bis 7 zur Herstellung einer hochwärmebeständigen Drahtwicklung, dadurch gekennzeichnet, daß man wärmebeständige isolierte Drähte mit dem Schmelzklebelack beschichtet, die Beschichtung trocknet, die beschichteten Drähte zur Herstellung einer Wicklung verwendet und die Beschichtung durch Wärmezufuhr schmilzt und dann aushärtet, wodurch die einzelnen Drähte der Wicklung untereinander fest verbacken bleiben wie bei einer getränkten Wicklung.

## Claims

1. Thermosetting heat bondable lacquer characterised in that it is a solution of a thermosetting mixture in a solvent or mixture of solvents boiling at a temperature in the range of 50 to 230° C, preferably of 130 to 210° C, said thermosetting mixture containing

(a) polyhydantoin resin of linear and/or branched structure and having the formula:

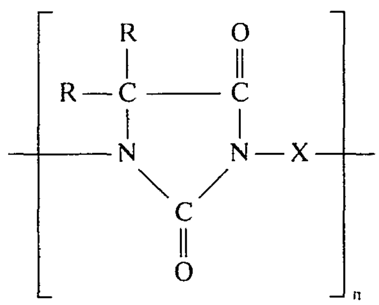

wherein the symbols R have the same or different meanings and are each hydrogen or an alkyl radical containing from 1 to 4 carbon atoms, the symbols X have the same or different meanings and are each an aliphatic, cycloaliphatic, heterocyclic and/or aromatic linking group and n is a positive number having a value corresponding to the specific viscosity, a one percent solution of the resin in cresol DAB V having a specific viscosity between 0.2 and 1.5 at 20° C,

(b) polyhydroxy polyether or phenoxy resin of linear and/or branched structure and having the formula:

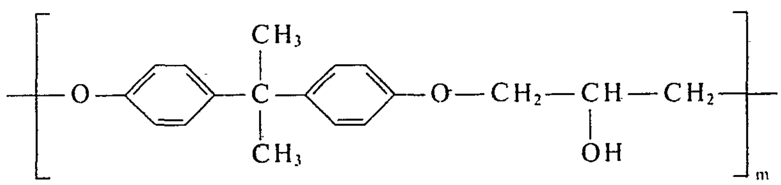

or

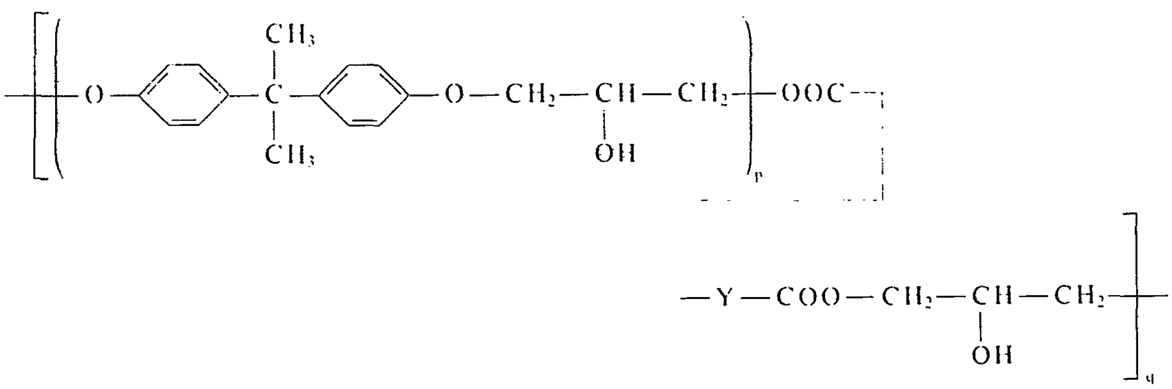

wherein Y is a bivalent aliphatic, cycloaliphatic, heterocyclic and/or aromatic group, m is a positive number having a value corresponding to the specific viscosity, p is a positive number having an average value of 1 to 30 and q is a positive number with a value corresponding to the

specific viscosity, a one percent solution of the resin in cresol DAB V having a specific viscosity between 0.2 and 1.5 at 20%, and

(c) polyurethane resin of linear and/or branched structure, at least 4% by weight of the resin consisting of the urethane grouping having the formula:

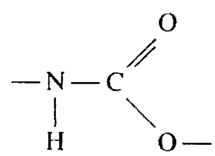

and a one percent solution of the resin in cresol DAB V having a specific viscosity between 0.1 and 1.0 at 20° C,

in such amounts that the composition of the thermosetting mixture, based on the resin solids, is within the heptagon shown in the triangular diagram of Fig. 1, the corners of said heptagon being defined by the following compositions:

| | component a) | component b) | component c) |
|---|---|---|---|
| 1. | 80% by weight | 5% by weight | 15% by weight |
| 2. | 80% by weight | 17% by weight | 3% by weight |
| 3. | 32% by weight | 65% by weight | 3% by weight |
| 4. | 20% by weight | 65% by weight | 15% by weight |
| 5. | 20% by weight | 40% by weight | 40% by weight |
| 6. | 30% by weight | 30% by weight | 40% by weight |
| 7. | 70% by weight | 5% by weight | 25% by weight |

2. Heat bondable lacquer according to claim 1 characterised in that it also contains catalysts and/or other auxiliaries and additives, such as synthetic resins serving for modification purposes, e.g. phenolic resins and melamine resins, leveling agents and/or adhesive primers, organic and/or inorganic fillers and dyes.

3. Heat bondable lacquer according to claim 1 or 2, characterised in that component (c) is an addition product made from at least bivalent isocyanates which can contain imide groups and the isocyanate groups of which can be partially blocked by monovalent compounds with active hydrogen, such as phenols, ε-caprolactam, malonic acid esters, benzyl alcohol or triisopropyl alcohol, and at least bifunctional hydroxy compounds.

4. Heat bondable lacquer according to claim 1 or 2, characterised in that component (c) is an addition product made from hexamethylene-1,6-diisocyanate, triphenylmethane-4,4',4''-triisocyanate, tolylene-2,4- and/or -2,6-diisocyanate, dimerized tolylene-2,4-diisocyanate, 1,4-diisocyanatobenzene, naphthylene-1,5-diisocyanate, diphenylmethane-4,4'-diisocyanate, trimethyl-hexamethylene diisocyanate or isophorone diisocyanate, and an at least bifunctional hydroxy compound.

5. Heat bondable lacquer according to claim 1 or 2 or 4, characterised in that component (c) is an addition product made from at least bivalent isocyanates which can contain imide groups and the isocyanate groups of which can be partially blocked by monovalent compounds with active hydrogen such as phenols, ε-caprolactam, malonic acid esters, benzyl alcohol or triisopropyl alcohol, and an at least dihydric alcohol such as ethylene glycol, diethylene glycol, triethylene glycol, butanediol, hexanetriol, glycerol, trimethylol propane, tris-(hydroxyethyl)-isocyanurate, a polyhydroxy polyester, e. g. a polyhydroxy polyester made from an at least dihydric alcohol such as one of the alcohols mentioned above and an at least dibasic carboxylic acid such as adipic acid, phthalic acid, isophthalic acid, terephthalic acid or trimellithic acid, the mole ratio of acid to alcohol being preferably from 3 : 4 to 3 : 6, or a polyhydroxy polyester-imide.

6. Heat bondable lacquer according to any one of claims 3 to 5, characterised in that component (c) is a polyaddition product made from isocyanates and hydroxy compounds in a mole ratio of isocyanate groups to hydroxy groups of 4 to 6 : 5.

7. Heat bondable lacquer according to any one of claims 2 to 6, characterised in that it contains as a catalyst lead acetate in an amount of 0.1 to 1.0% by weight.

8. Process for the preparation of a heat bondable lacquer according to any one of claims 1 to 7, characterized by mixing in a corresponding quantity ratio a solution of component (a) in a solvent or mixture of solvents, preferably in a phenolic solvent or benzyl alcohol or mixtures thereof, optionally with the addition of hydrocarbons which are preferably aromatic, such as xylene, or mixtures thereof, a solution of component (b) in a solvent or mixture of solvents, preferably in a phenolic solvent, benzyl alcohol, N-methylpyrrolidone, dimethylformamid, 2-methoxyethyl acetate or 2-ethoxyethyl acetate or mixtures thereof, optionally with the addition of hydrocarbons which are preferably aromatic, such as xylene, or mixtures thereof, and a solution of component (c) in a solvent or mixture of solvents, preferably in a phenolic solvent, benzyl alcohol or N-methylpyrrolidone, optionally with the addition of hydrocarbons, which are preferably aromatic, such as xylene, or mixtures thereof.

9. Process according to claim 8, characterized by also adding catalysts and/or other auxiliaries and additives such as synthetic resins serving for modification purposes, e. g. phenolic resins and melamine resins, leveling agents and/or adhesive primers, organic and/or inorganic fillers and dyes.

10. The use of the heat bondable lacquer according to any one of claims 1 to 7 for the manufacture of a highly heat stable wire coil, characterized in that heat stable insulated wires are coated with the heat bondable lacquer, the coating is dried, the coated wires are used for the manufacture of a coil, and the coating is molten and then cured by supplying heat, whereby the individual wires of the coil remain firmly baked to each other like in an impregnated coil.

**Revendications**

1. Vernis thermocollant thermodurcissable, caractérisé en ce qu'il est une solution d'un mélange thermodurcissable dans un solvant ou un mélange de solvants qui bout à une température de l'intervalle de 50 à 230° C et de préférence de 130 à 210° C, le mélange thermodurcissable contenant

(a) une résine de polyhydantoine à structure linéaire et/ou ramifiée, répondant à la formule:

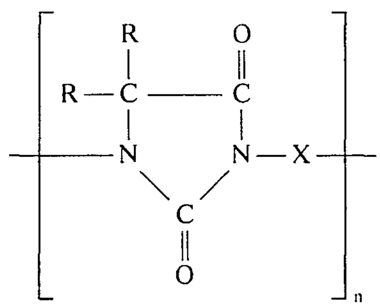

dans laquelle les symboles R ont une signification identique ou différente et représentent chacun un atome d'hydrogène ou un radical alkyle de 1 à 4 atomes de carbone, les symboles X ont une signification identique ou différente et représentent chacun un radical de liaison aliphatique, cycloaliphatique, hétérocyclique et/ou aromatique et n représente un nombre positif d'une valeur convenant pour la viscosité spécifique, et dont la solution à 1% dans le crésol DAB V à 20° C a une viscosité spécifique comprise entre 0,2 et 1,5,

(b) une résine de polyhydroxypolyéther ou résine phénoxy à structure linéaire et/ou ramifiée, répondant à la formule:

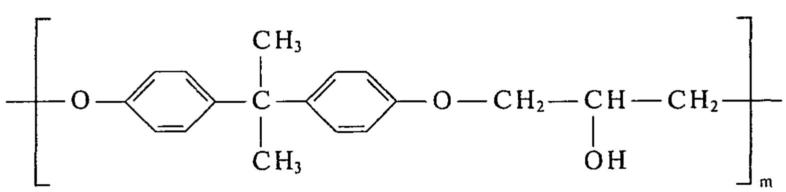

ou

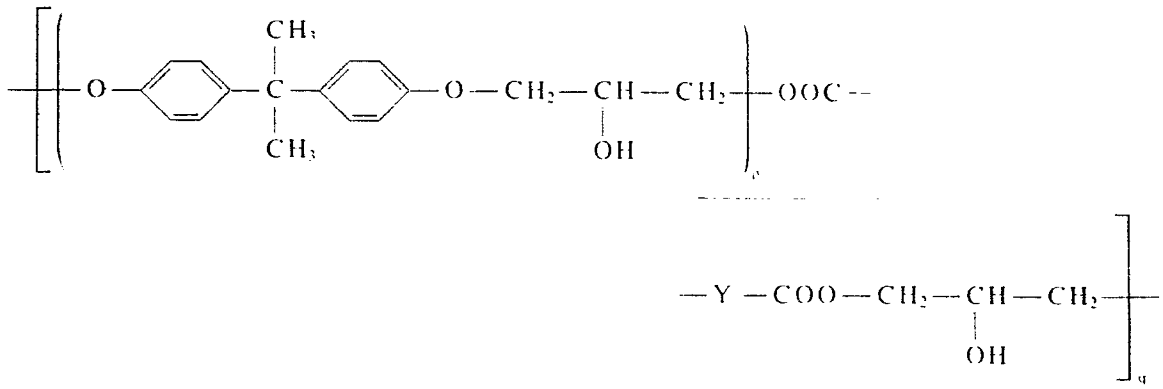

dans laquelle Y représente un radical aliphatique, cycloaliphatique, hétérocyclique et/ou aromatique divalent, m représente un nombre positif d'une valeur convenant pour la viscosité spécifique, p représente un nombre positif d'une valeur moyenne de 1 à 30 et q représente un nombre positif d'une valeur convenant pour la viscosité spécifique, et dont la solution à 1% dans le crésol DAB V à 20° C a une viscosité spécifique comprise entre 0,2 et 1,5 et

(c) une résine de polyuréthanne à structure linéaire et/ou ramifiée qui consiste pour au moins 4% en poids en le radical uréthanne de formule:

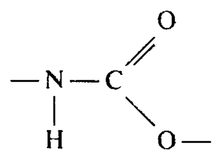

et dont la solution à 1% dans le crésol DAB V à 20° C a une viscosité spécifique comprise entre 0,1 et 1,0,

en quantitéstelles que la constitution du mélange thermodurcissable, rapportée aux solides résineux, tombe, dans le système ternaire représenté à la Fig. 1, à l'intérieur de l'heptagone dont les sommets sont définis par les constitutions suivantes:

| | Constituant a) | Constituant b) | Constituant c) |
|---|---|---|---|
| 1. | 80% en poids | 5% en poids | 15% en poids |
| 2. | 80% en poids | 17% en poids | 3% en poids |
| 3. | 32% en poids | 65% en poids | 3% en poids |
| 4. | 20% en poids | 65% en poids | 15% en poids |
| 5. | 20% en poids | 40% en poids | 40% en poids |
| 6. | 30% en poids | 30% en poids | 40% en poids |
| 7. | 70% en poids | 5% en poids | 25% en poids |

2. Vernis thermocollant suivant la revendication 1, caractérisé en ce qu'il contient également des catalyseurs et/ou autres auxiliaires et additifs comme des résines synthétiques servant à la modification, par exemple des résines phénoliques et des résines de mélamine, des agents d'étalage et/ou des primaires d'adhésion, des charges organiques et/ou inorganiques et des colorants.

3. Vernis thermocollant suivant la revendication 1 ou 2, caractérisé en ce que le constituant (c) est un produit d'addition d'isocyanate aus moins divalent contenant éventuellement des radicaux imide, dont les radicaux isocyanate sont éventuellement bloqués pour partie par des composés à hydrogène actif monovalents, comme des phénols, l'ε-caprolactame, les esters maloniques, l'alcool benzylique ou l'alcool triisopropylique, et de composé hydroxylé au moins difonctionnel.

4. Vernis thermocollant suivant la revendication 1 ou 2, caractérisé en ce que le constituant (c) est un produit d'addition de 1,6-diisocyanatohexamethylène, de 4,4',4''-triisocyanatotriphénylméthane, de

2,4- et/ou 2,6-diisocyanatotoluène, de 2,4-diisocyanatotoluène dimérisé, de 1,4-diisocyanatobenzène, de 1,5-diisocyanatonaphthalène, de 4,4'-diisocyanatodiphénylméthane, de diisocyanatotriméthylhexaméthylène ou de diisocyanatoisophorone et de composé hydroxylé au moins difonctionnel.

5. Vernis thermocollant suivant la revendication 1 ou 2 ou 4, caractérisé en ce que le constituant (c) est un produit d'addition d'isocyanate au moins divalent contenant éventuellement des radicaux imide, dont les radicaux isocyanate sont éventuellement bloqués pour partie par des composés à hydrogène actif monovalents, comme des phénols, l'ε-caprolactame, les esters maloniques, l'alcool benzylique ou l'alcool triisopropylique, et d'un alcool au moins divalent, comme l'éthylèneglycol, le diéthylèneglycol, le triéthylèneglycol, le butanediol, l'hexanetriol, le glycérol, le triméthylolpropane ou l'isocyanurate de tris-(hydroxyéthyle), d'un polyesterpolyol, par exemple d'un polyesterpolyol issu d'un alcool au moins divalent, comme l'un des alcools précités, et d'un acide carboxylique au moins dibasique, comme l'acide adipique, l'acide phtalique, l'acide isophtalique, l'acide téréphtalique ou l'acide trimellitique, présentant de préférence un rapport molaire de l'acide à l'alcool de 3 : 4 à 3 : 6, ou d'un polyesterimide-polyol.

6. Vernis thermocollant suivant l'une quelconque des revendications 3 à 5, caractérisé en ce que le constituant (c) est un produit de polyaddition d'isocyanate et de composé hydroxylé dans un rapport molaire des radicaux isocyanate aux radicaux hydroxyle de 4 jusqu'à 6 à 5.

7. Vernis thermocollant suivant l'une quelconque des revendications 2 à 6, caractérisé en ce qu'il contient 0,1 à 1,0% en poids d'acétate de plomb comme catalyseur.

8. Procédé de préparation du vernis thermocollant suivant l'une quelconque des revendications 1 à 7, caractérisé en ce qu'on mélange une solution du constituant (a) dans un solvant ou mélange de solvants, de préférence un solvant phénolique ou l'alcool benzylique ou les mélanges de ceux-ci, éventuellement avec apport d'hydrocarbures de préférence aromatiques, tels que le xylène, ou leurs mélanges, une solution du constituant (b) dans un solvant ou mélange de solvants, de préférence un solvant phénolique, l'alcool benzylique, la N-méthylpyrrolidone, le diméthylformamide, l'acétate de 2-méthoxyéthyle ou l'acétate de 2-éthoxyéthyle ou des mélanges de ceux-ci, éventuellement avec apport d'hydrocarbures de préférence aromatiques, tels que le xylène, ou leurs mélanges, et une solution du constituant (c) dans un solvant ou mélange de solvants, de préférence un solvant phénolique, l'alcool benzylique ou la N-méthylpyrrolidone, éventuellement avec apport d'hydrocarbures de préférence aromatiques, tels que le xylène, ou leurs mélanges, dans un rapport pondéral approprié.

9. Procédé suivant la revendication 8, caractérisé en ce qu'on ajoute également des catalyseurs et/ou autres auxiliaires et additifs comme des résines synthétiques servant à la modification, par exemple des résines phénoliques et des résines de mélamine, des agents d'etalage et/ou des primaires d'adhésion, des charges organiques et/ou inorganiques et des colorants.

10. Utilisation du vernis thermocollant suivant l'une quelconque des revendications 1 à 7 pour la fabrication d'un enroulement à haute résistance à la chaleur, caractérisé en ce qu'on revêt des fils isolés résistants à la chaleur au moyen du vernis thermocollant, on sèche le revêtement, on utilise les fils revêtus pour la fabrication d'un enroulement et on fait fondre puis durcir le revêtement par apport de chaleur, de manière que les différents fils de l'enroulement restent fermement collés les uns aux autres comme dans un enroulement imprégné.

FIG. 1

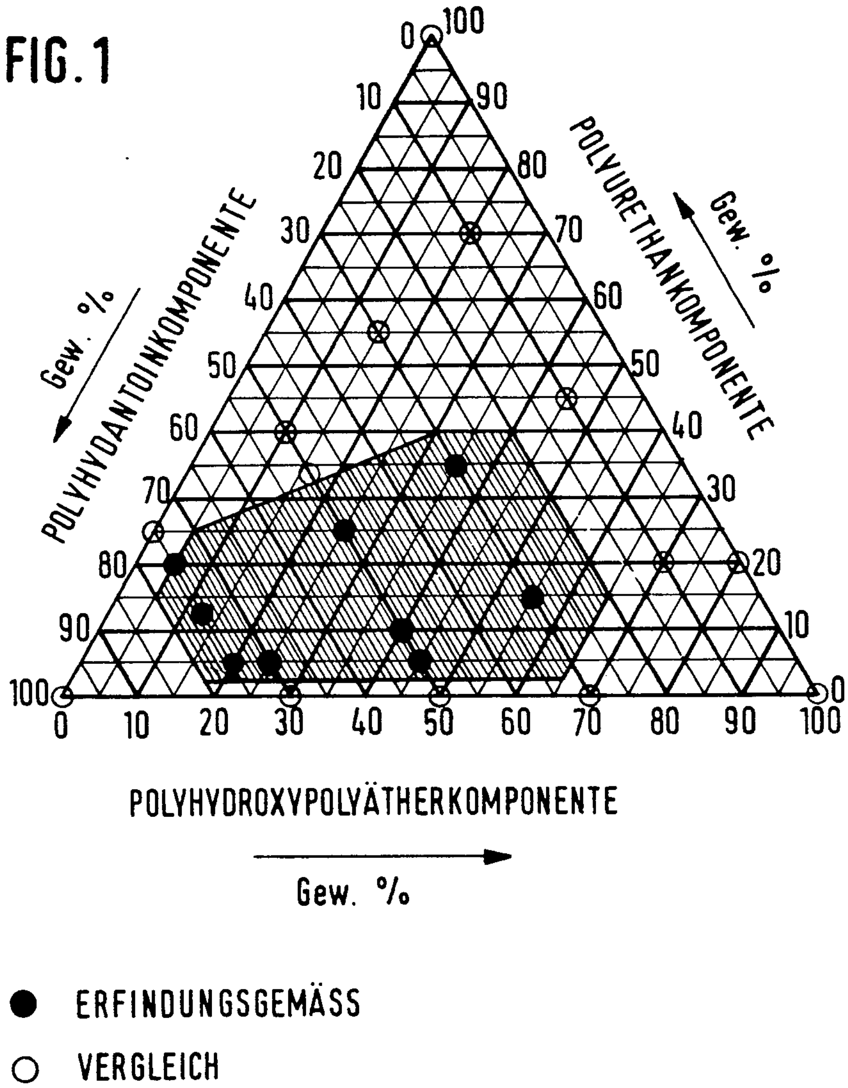


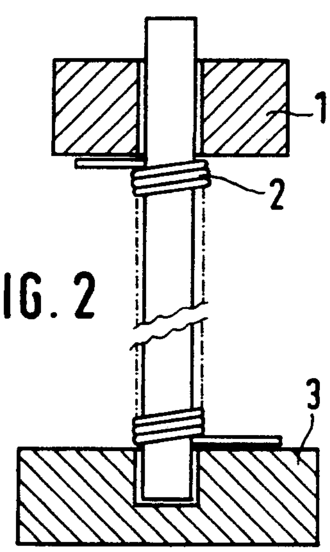


FIG. 2

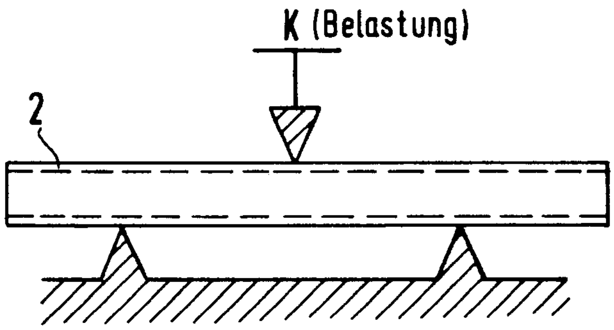


FIG. 3